# EUROPÄISCHE PATENTANMELDUNG

(11) **EP 4 063 603 A1**
(43) Veröffentlichungstag der Anmeldung: **28.09.2022**
(21) Anmeldenummer: 21166794.4
(22) Anmeldetag: 01.04.2021
(51) Int. Cl.: E06B 3/20, B29C 48/34, B29C 48/49, B29C 48/12, B29C 48/16

(54) **VERFAHREN UND VORRICHTUNG ZUR HERSTELLUNG EINES HYBRIDPROFILS BZW. EINES HYBRIDPROFILISOLATORS ZUM VERBINDEN VON METALLPROFILEN IM FASSADEN-, FENSTER- ODER TÜRENBAU UND VON VERBUNDPROFILSYSTEMEN**

(30) Priorität: 25.03.2021 WO PCT/IB2021/052498
(71) Anmelder: Jansen AG, 9463 Oberriet (CH)
(72) Erfinder: HÖRLER, Yves, 9443 Widnau (CH); LOHER, Robin, 9463 Oberriet (CH); HUTTER, Severin, 9463 Oberriet (CH)
(74) Vertreter: Patentbüro Paul Rosenich AG

(57) **Zusammenfassung**

Die Erfindung betrifft ein Verfahren zum kontinuierlichen Herstellen eines Hybridprofils aus einer Trägerstruktur und zumindest einem Kunststoff. Dieses umfasst die Schritte eines Bereitstellens zumindest eines ersten Endlosprofils der Trägerstruktur und eines Bewegens des Endlosprofils durch eine Werkzeugkammer eines Herstellungswerkzeugs. Weiters erfolgt ein Bereitstellen eines ersten Kunststoffmaterials und ein Beaufschlagen des ersten Endlosprofils mit dem ersten Kunststoffmaterial im Bereich der Werkzeugkammer. Erfindungsgemäss erfolgt dabei ein Erzeugen einer formschlüssigen Verbindung zwischen dem ersten Endlosprofil und dem Kunststoffmaterial, wobei der erste Kunststoff das erste Endlosprofil gesteuert nur abschnittsweise beaufschlagt und es dadurch abschnittsweise einbettet.

## Beschreibung

Die Erfindung betrifft ein Verfahren zur Herstellung eines Hybridprofils oder Hybridisolators, wie diese beispielsweise zum Verbinden von Metallprofilen im Fassaden-, Fenster- oder Türenbau und bei Verbundprofilsystemen zum Einsatz kommen können. Neben dem Verfahren ist auch eine entsprechend für dieses Verfahren ausgebildete Vorrichtung zur Herstellung dieser Hybridprofile umfasst.

Beispiele für solche Hybridprofile im vorliegenden technischen Gebiet von Verbundprofilen für Fenster, Türen oder Fassaden finden sich in der DE 2 919 437 A1 und der EP 1 869 278 A1. Solche Hybridprofile bestehen aus einem Metallprofil und einer äusseren Ummantelung aus einem wärmedämmenden Kunststoff bzw. allenfalls mit daran angeordneten separaten Brandschutzelementen.

Nachteilig dabei ist, dass diese bekannten Hybridprofile zusätzliche Bauteile benötigen um eine offene Struktur zu schliessen und dass diese durch den Einsatz von vielen metallischen Bauteilen schlecht isolieren - jedoch sind diese andererseits einfach mit üblichen Blechverarbeitungsmassnahmen zu fertigen und danach bei Bedarf mit extern hergestellten zusätzlichen Bauteilen zu ergänzen.

Die Patentanmeldung PCT/IB2021/052498, welche hiermit per Referenz mit einbezogen ist und als hierin insbesondere betreffend die Offenbarung über die dort erfindungsgemässen Hybridprofile, umfassend insbesondere die Figuren, die dazugehörige Figurenbeschreibung und die Beschreibung der Erfindung mitgeoffenbart gilt, zeigt Beispiele bevorzugter Ausführungsformen von erfindungsgemässen Hybridprofils bzw. Verbundprofilsystemen bzw. Hybridisolatoren zum Verbinden von Metallprofilen im Fassaden-, Fenster- oder Türenbau, bei welchen zumindest eine erste Metallarmierung mit zumindest einer ersten Kunststoffschicht beschichtet ist. Dabei ragt die erste Metallarmierung bereichsweise aus der ersten Kunststoffschicht heraus. Dabei kann die erste Metallarmierung z.B. ein Langblech sein, welches eine Blechstärke von 0.15 bis 1.2 mm aufweist.

Probleme bzw. Aufgaben sind, derartige Verbundprofilsystemen bzw. Hybridisolatoren einfach und zuverlässig zu fertigen, vorzugsweise in einem einzigen fortlaufenden Herstellprozess bzw. Herstellverfahren. Speziell sollten derartige Verbundprofilsystemen bzw. Hybridisolatoren dabei quasi im Endlosverfahren herstellbar sein, vorzugsweise weitgehend automatisiert und mit geringem Personaleinsatz. Neben einem neuen Verfahren das kurze Herstellungszeiten ermöglicht, ist auch der Materialaufwand dabei möglichst gering zu halten, als z.B. mit keinem oder nur wenig Materialabtrag und somit wenig Abfall - sowohl beim Metall, wie auch beim Kunststoff.

Aufgabe der vorliegenden Erfindung ist es somit, ein Verfahren bzw. eine entsprechende Vorrichtung bereitzustellen, um einen verbesserten Hybridisolator zu schaffen, welcher zumindest einen der vorgenannten Nachteile nicht aufweist. Insbesondere ein verlässliches Herstellverfahren für einen Hybridisolators für den Fassaden-, Fenster- oder Türenbau mit möglichst geringem Materialaufwand für die Metallarmierung und Beschichtung, bei gleichbleibender oder geringerer Wärmeleitfähigkeit, zu schaffen.

Die Aufgabe wird durch die Merkmale der unabhängigen Patentansprüche gelöst. Vorteilhafte Weiterbildungen sind in den Figuren und in den abhängigen Patentansprüchen dargelegt.

Die Erfindung betrifft ein Verfahren zum kontinuierlichen Herstellen eines Hybridprofils. Speziell wird dabei auch auf die Ausführungen des Profils in der Patentanmeldung PCT/IB2021/052498 Bezug genommen. Das dort durch dieselbe Anmelderin offenbarte Hybridprofil entspricht einem typischen Hybridprofil-Ausführungsbeispiel, dass durch das hier gegenständliche Verfahren bzw. durch die neue erfindungsgemässe Vorrichtung hergestellt werden soll.

Hybridprofile sind lang-gestreckte Bauelemente bzw. Halbzeuge, vorzugsweise hergestellt in einer Länge von mehreren Metern bzw. in einem kontinuierlichen oder endlosen Herstellungsverfahren, welche insbesondere ein im Wesentlichen gleichbleibendes äusseres Querschnittsprofil über deren Länge aufweisen. Diese werden dabei hybrid, also aus zumindest zwei unterschiedlichen Materialien hergestellt.

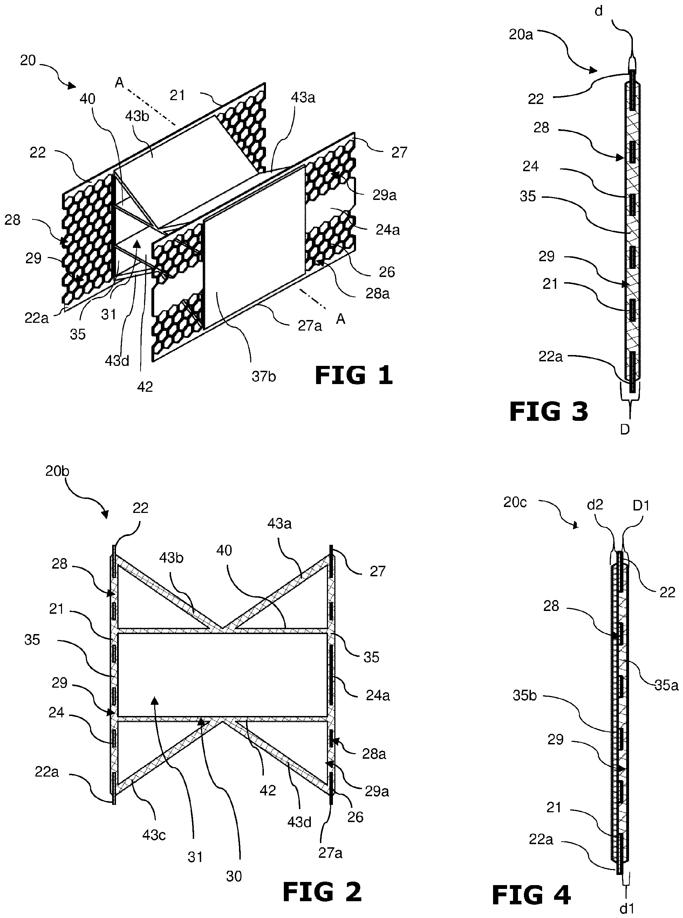

Der Begriff Hybrid-Profil ist dabei nicht zwingend derart zu verstehen, dass das Hybridprofil zwingen eine profilierte Formgebung aufweisen musss, sondern es kann sich bei dem erfindungsgemässen Hybridprofil z.B. auch um ein flaches Hybridbauteil, ohne Profilierung des Querschnitts handeln (siehe z.B. Fig.3). In anderen Ausführungen ist der Querschnitt des Hybridprofils jedoch profiliert, hat also eine nicht nur eine gerade Profilgeometrie im Querschnitt, z.B. mit Abkantungen, Nuten, als Winkel oder Kastenstruktur (siehe z.B. Fig.1), etc. Dabei müssen nicht zwingend alle Querschnittsbereiche des Hybridprofils mit mehreren Materialen ausgebildet sein, sondern es können auch Querschnittsbereiche des Hybridprofils aus nur einem der Materialen ausgebildet sein.

In vielen Ausführungsformen von Hybridprofilen ist ein erstes der Materialen als Träger bzw. als Armierung ausgebildet, insbesondere aus Metall oder aus einem Kunststoff mit einer Faserverstärkung, oder als eine Einlage aus Faserverstärkung zur Einbettung in einen Kunststoff. Eine solche Armierung hat unter anderem die Aufgabe der Bereitstellung einer hinreichenden Festigkeit und/oder Befestigbarkeit des Hybridprofiles. Zum Beispiel kann die Befestigbarkeit in Form von Montageabschnitten vorgesehen sein. Dabei kann die Armierung in Längsrichtung bzw. entlang einer Längsfläche vorzugsweise mit Ausnehmungen bzw. Durchbrüchen ausgebildet sein, beispielsweise zumindest abschnittsweise eine Netz- oder Gitterstruktur ausbilden. Die Armierung kann dabei vorzugsweise als im Wesentlichen flaches Band ausgeführt sein, kann aber auch in ihrem Querschnitt profiliert, also nicht vollständig flach, sein. Insbesondere kann die Armierung auch Unterbrechungen aufweisen, um zwar einerseits die nötige Stärke/Festigkeit, andererseits aber auch ein Minimum an Metall/Gewicht aufweisen.

Ein zweites der Materialien ist in vielen Ausführungsformen meist ein Kunststoff, z.B. ein Duroplast oder ein Thermoplast, kann aber auch eine Zementmischung, eine Papiermischung, eine organische Verbindung oder ein anders, insbesondere leichtschmelzendes Metall sein. Das zweite Material kann z.B. isolierend ausgerüstet sein bzw. eine geringe Wärmeleitung aufweisen, oder spezielle mechanische und/oder optische Eigenschaften der Oberfläche bereitzustellen, ein geringeres Gewicht als die Armierung aufzuweisen, einen geringeren Materialpreis oder kleineren CO2-Footprint aufzuweisen, brandschutztechnische Aufgaben übernehmen, etc. Dabei wird erfindungsgemäss nur ein Teil, vorzugsweise ein Grossteil, also z.B. 70%, 80% oder 90%, oder 95% oder 98% der Oberfläche des ersten Materials quer zu seiner Längserstreckung beschichtet. Das heisst, 100% dieser bedeckten/beschichteten Oberfläche (also nicht die ganze Trägerstruktur) über die gesamte Länge des Hybridprofils wird vom zweiten Material abgedeckt bzw. umschlossen oder eingebettet. In erfindungsgemässen Ausführungen von Hybridprofilen wird jedoch nicht das gesamte erste Material über die volle Profillänge von einem weiteren Material bedeckt bzw. umschlossen (wie dies allenfalls in bekannten Beschichtungssystemen der Fall ist), sondern wird die Armierung nur abschnittsweise eingebettet, sodass zumindest ein Bereich der Armierung entlang ihrer Länge unbedeckt bleibt.

Eine weitere Aufgabe des zweiten Materials kann die Bereitstellung einer Formgebung oder Formstabilität des gesamten Hybridprofils sein, z.B. in Form von Stegen, Falzen, Nuten, etc., (welche sich zumindest teilweise auch in Zusammenwirkung mit der Armierung ergeben können).

Ein erfindungsgemässes Hybridprofil - auch als Hybridisolator bezeichnet - besteht dabei aus zumindest einer Trägerstruktur aus einem ersten Material und zumindest einem zweiten Material. Die Trägerstruktur ist dabei ausgebildet, im Hybridprofil eine Armierung und/oder Montageabschnitte auszubilden, und ist vorzugsweise aus einem Metall, insbesondere als ein Metallblech ausgebildet. Die Metallarmierung weist eine Blechstärke zwischen 0.15 und 1.2 mm, insbesondere etwa 0.5mm, auf, sodass der Hybridisolator eine ausreichende Stabilität (Zugfestigkeit und Druckstabilität) für den Fassaden-, Fenster- oder Türenbau aufweist. Vorzugsweise ist die Trägerstruktur ein Stahllangblech, sodass die Stabilität des Hybridisolators verbessert wird und die Metallarmierung mithilfe von Stanz- oder Walzverfahren einfach herstellbar ist. Alternativ kann die erste Metallarmierung auch ein Langblech aus rostfreiem Edelstahl oder aus Aluminium oder aus einem anderen Metall aus dem Hoch- oder Tiefbau sein. Mit diesem ersten Material - insbesondere aus Metall - soll dabei speziell ein Befestigen bzw. Montieren des Hybridprofils an weiteren Strukturen (bzw. ein Befestigen von weiteren Strukturen am Hybridprofil) ermöglicht werden, was zusätzlich oder alternativ zu einem Versteifen oder Armieren des Hybridprofils durch die Trägerstruktur erfolgen kann. Das erste Material kann aber optional auch z.B. eine Faser- oder Gewebeverstärkung aufweisen, bzw. als ein derartiges Faser- oder Gewebeverstärktes Material ausgebildet sein, bzw. ein hochfester Kunststoff sein.

Das zweite Material ist in vielen der Ausführungsformen ein Kunststoff, also z.B. ein thermoplastischer oder duroplastischer technischer Werkstoff, beispielsweise PS, PET, PA, PBT, PC, PMMA, PPEm, TPC, TPO usw. - mit einer RTI Dauergebrauchstemperatur von 90 bis 150°C) oder ein Hochleistungskunststoff (beispielsweise PEK, PEEK, PAI, PPS, LCP, PI usw. - mit einer RTI Dauergebrauchstemperatur von > 150°C) oder Mischformen davon, je nach struktureller oder funktioneller Funktion der entsprechenden Kunststoffschicht am Hybridisolator. Die Kunststoffe können amorphe oder teilkristalline Kunststoffe umfassen, und transparent, hart, chemisch beständig, opak oder zäh sein.

Dieses zweite Material ist z.B. speziell aus einer Vielzahl von möglichen Materialen derart ausgewählt, dass es gewünschte mechanische, chemische oder optische Oberflächeneigenschaften, und/oder thermische Eigenschaften (z.B. Wärmeisolierung, Brandschutz, ...) etc. erfüllt. Bevorzugterweise ist eine erste Kunststoffschicht des zweiten Materials wärmeresistent, also z.B. für einen Temperaturbereich von -20 bis +220 °C ausgelegt. Es ist z.B. ein Pulverbeschichten der ersten Kunststoffschicht möglich und/oder die einwandfreie Verwendung des Hybridisolators im Einsatz bei -20 bis +80 °C gewährleistet. Der Kunststoff wird dabei vorzugsweise mit einer Schichtdicke zwischen 0.2 und 2.8 mm, oder speziell zwischen 0.2 und 0.8 mm aufgetragen. Insbesondere ist die Beschichtungsdicke 0.5 mm. In einer bevorzugten Ausführungsform kann jedoch auch eine Dicke von ca. 1.5 mm angestrebt werden.

Das erfindungsgemässe Verfahren umfasst dabei zumindest die folgenden Schritte.
a) Bereitstellen zumindest eines ersten Endlosprofils der Trägerstruktur (Armierung). Dabei kann insbesondere ein Bereitstellen eines Endlos-Metallprofils oder eines Endlos-Legierungsprofils oder kann das erste Endlosprofil aus fasrigen bzw. erstreckten/gestreckten Materialien erfolgen. Beispielsweise kann die Trägerstruktur in Längen von mehr als 20m, 50m oder hunderten Metern bzw. bis zu mehreren Kilometern, insbesondere von einer (quasi) endlosen Rollen oder Spulen erfolgen. Dabei kann optional auch ein Zusammenschweissen von Enden der Trägerstruktur bei einem Rollenwechsel erfolgen, sodass eine tatsächliche Endloszufuhr erfolgt. Die Trägerstruktur kann dabei als im wesentlichen flaches Metallband bereitgestellt sein.
b) Bewegen/Durchführen des Endlosprofils durch eine Werkzeugkammer eines Herstellungswerkzeugs; speziell ein kontinuierliches Bewegen. Dieses kann z.B. mit angetriebenen Walzen, Rollen, Greifern, etc. erfolgen, beispielsweise auch mit einem positionierenden Führen und/oder Ausrichten bzw. Glätten des Endlosprofils vor dem Eintritt in die Werkzeugkammer.
c) Bereitstellen zumindest eines ersten Kunststoffmaterials. Dieses erfolgt vorzugsweise in einer flüssigen oder plastischen Form des Kunststoffmaterials, z.B. als flüssige oder plastische Kunststoffschmelze oder als flüssige Komponenten eines Mehrkomponentenkunststoffes, etc. Optional kann dabei auch ein Einbringen weiter Inhaltsstoffe, wie Faserverstärkungen, Pigmenten, etc. in das Kunststoffmaterial erfolgen. Dabei kann ein Plastifizieren, Verflüssigen und/oder Mischen des Kunststoffmaterials vorzugsweise direkt bei (oder allenfalls auch zumindest teilweise in) der Werkzeugkammer erfolgen, z.B. durch Erwärmen von festem Kunststoff. Das Bereitstellen umfass dabei insbesondere auch ein Fördern des Kunststoffmaterials hin zur und/oder in die Werkzeugkammer, z.B. mit Förderschnecken, Pumpen, Pressen, Extrudern, etc., speziell ist ein kontinuierliches Fördern vorgesehen.
d) Beaufschlagen des ersten Endlosprofils mit zumindest dem ersten Kunststoffmaterial im Bereich der Werkzeugkammer. Dieses kann direkt in der Werkzeugkammer oder an deren Ausgang bzw. im Anschluss an diese außerhalb der Werkzeugkammer erfolgen. Dabei kann ein geführtes Drücken oder Pressen des flüssigen oder plastischen Kunststoffmaterials hin zum Endlosprofil erfolgen.
e) Erzeugen einer formschlüssigen und/oder stoffschlüssigen Verbindung zwischen dem ersten Endlosprofil und dem Kunststoffmaterial, wobei der erste Kunststoff das erste Endlosprofil gesteuert nur abschnittsweise beaufschlagt und es dadurch abschnittsweise einbettet. Insbesondere kann ein formschlüssiges Verbinden des Kunststoffs mit dem Endlosprofil erfolgen, bei welchem der Kunststoff zumindest teilweise in Ausnehmungen oder Hinterschneidungen im Endlosprofil eindringt. Alternativ oder zusätzlich kann ein stoffschlüssiges Verbinden durch eine Haftung oder Klebung des Kunststoffs am Endlosprofil erfolgen. Erfindungsgemäss können dabei speziell die Vorteile einer schlechteren Wärmeleitung und geringerem Gewicht und Materialverbrauch durch Ausnehmungen im Endlosprofil in neuartiger und vorteilhafter Weise mit den Vorteilen einer robusten und zuverlässigen, formschlüssigen Verbindung des Kunststoffs mit dem Endlosprofil kombiniert werden, was speziell für Hybridisolatoren im technischen Gebiet von Fassaden-, Fenster- oder Türenbau eine vorteilhafte Neuerung darstellt, welche mit vorliegendem Verfahren bzw. Vorrichtung in einfacher Weise als Massenprodukt in einem Endlosverfahren herstellbar ist. Dabei erfolgt dieses abschnittsweise Beaufschlagen/Einbetten derart, dass ein definiertes Freibleiben von Kunststoff zumindest eines definierten Bereichs der Oberfläche des Endlosprofils erfolgt. Dabei kann ein Leiten oder Lenken des Kunststoffs insbesondere z.B. mit entsprechend ausgebildeten Matrizen, Kanälen und/oder Dichtungen in oder an der Werkzeugkammer gegenüber dem Endlosprofil derart erfolgen, dass der Kunststoff nur an einem beschränkten Teil der Oberfläche eine Verbindung mit dem Endlosprofil eingeht. Erfindungsgemäss erfolgt daher kein vollständiges, sondern ein unvollständiges Ummanteln des Endlosprofils in seinem Querschnitt derart, dass zumindest ein Teilbereich des Endlosprofils kunststofffrei gehalten ist. In anderen Worten bedeutet «abschnittsweise», dass das Beaufschlagen nicht-vollflächig bzw. nicht-vollumfänglich erfolgt. Abschnittsweise bezieht sich dabei vorzugsweise zumindest in Bezug auf die Querschnittsfläche des Endlosprofils, sodass vom Endlosprofils zumindest ein Streifen in dessen Längsrichtung nicht mit dem Kunststoffmaterial beaufschlagt ist. Optional kann das «abschnittsweise» aber auch, bzw. zusätzlich, die zur Längsrichtung (bzw. der Bewegungs- oder Förderrichtung des Endlosprofils) orthogonale Richtung betreffen, beispielsweise indem gesteuert definierte Längenabschnitte des Hybridprofils ohne oder mit einer anderen Anordnung von Kunststoff hergestellt werden, z.B. mit schliessbaren Blenden in oder an der Werkzeugkammer oder einfach durch stoppen der Kunststoffzuführung. Damit ist das resultierende Hybridprofil beispielsweise ohne Nachbearbeitung an den nicht beaufschlagten abschnitten montierbar, z.B. schweissbar, sodass ein einfaches Verbinden mit anderen Strukturen, Bauelementen oder weiteren Hybridprofilen erfolgen kann. Gesteuert heisst dabei, dass die Abschnitte an denen ein Beaufschlagen oder Nicht-Beaufschlagen erfolgt in definierte bzw. kontrollierter Weise erzeugt werden, vorzugsweise entlang des Bewegens des Endlosprofils in konstanter Weise, optional auch entlang des Bewegens des Endlosprofils in variabler Weise.

Vorzugsweise weist das erste Endlosprofil zumindest eine oder mehrere Aussparungen, insbesondere eine Gitterstruktur, auf. Dabei erfolgt während des Schritts d) ein Eindringen das Kunststoffmaterials in die zumindest eine oder mehreren Aussparungen bzw. in das Gitter, vorzugsweise derart, dass bevorzugt ein Ausfüllen dieser Aussparung erfolgt.

Vorzugsweise erfolgt aber bereits das Bereitstellen a) mit einem bereits mit den Aussparungen versehenen Endlosprofils. In einer erweiterten Ausführungsform des Verfahrens kann dabei auch zwischen Schritt a) und b) ein Stanzen, (Laser- oder Wasserstrahl-)Schneiden, Pressen, Biegen, Formen, Rollen, Walzen oder des Endlosprofils erfolgen, z.B. zum Herstellen der Gitterstruktur und/oder einer Profilierung des Querschnitts der Trägerstruktur, vorzugsweise direkt von der Rolle, beispielsweise vor oder bei Schritt b).

Vorzugsweise erfolgt der Schritt e) innerhalb der Werkzeugkammer. Damit kann z.B. das abschnittsweise Beaufschlagen innerhalb einer Kavität der Werkzeugkammer erfolgen, insbesondere mit einem Bereitstellen einer vom Kunststoff auszufüllenden Hohlform als Negativ des Hybridprofils, durch welche Hohlform das Bewegen des Endlosprofils erfolgt. In einer Ausführungsform kann dabei ein formschlüssiges Umschliessen des Querschnitts des Endlosprofils an einer Eingangsseite der Werkzeugkammer und ein formschlüssiges Umschliessen des Querschnitts des Hybridprofils an einer Ausgangsseite der Werkzeugkammer erfolgen.

Alternativ zu vorherigem, erfolgt der Schritt e) direkt nach oder bei einem Austritt des ersten Endlosprofils aus der Werkzeugkammer. Damit kann der Kunststoff bei Austritt unter Druck auf zu beaufschlagende Abschnitte des Endlosprofils aufgebracht werden und die Formschlüssige Verbindung eingehen. Dabei kann bevorzugt das Hybridprofil gleichzeitig mit einem Unterdruck beaufschlagt werden.
In einer speziellen Ausführungsform kann auch ein Aufbringen eines Unterdruckes (relativ zur Umgebungsluft/Atmosphäre) im Bereich der Werkzeugkammer (speziell in oder am Austritt dieser) erfolgen, sodass ein Entlüften bzw. Teil-Vakuumieren der Aussparungen erfolgt. Beispielseise kann dieses Aufbringen in einem Bereich zwischen Schritt d) und e) bzw. f) erfolgen, beispielsweise mit einem Absaugen entgegen der Bewegungsrichtung des Endlosprofils bei einem Einlass des Endlosprofils in die Werkzeugkammer. Damit kann z.B. ein besseres oder zuverlässigeres Füllen der Aussparungen erzielt werden.

Dabei kann insbesondere ein Erwärmen bzw. ein Temperaturregeln der Werkzeugkammer auf einen optimale Prozesstemperatur erfolgen. Insbesondere kann auch ein Erwärmen des Endlosprofils vor dem Beaufschlagen mit dem Kunststoffmaterials erfolgen, was je nach Kunststoff-Art eine Anhaftung des Kunststoffs verbessern kann. Ein Ausgleich von Erstarrungsspannungen oder Schrumpfungen und/oder ein Aushärten von Mehrkomponentenkunststoff kann so ebenso bewirkt werden.

In einer anderen Ausführungsform mit anderen Kunststoffen kann auch eine aktive Kühlung des Endlosbandes durchgeführt werden.

Vorzugsweise erfolgt ein Bereitstellen eines Haft-Kunststoffmaterials (eine Art Haftgrund oder Kleber) und ein Beaufschlagen des Endlosprofils mit diesem vor dem Schritt d). Damit kann eine bessere und stabiler Anhaftung des Kunststoffmaterials erzielt werden. Auch können chemische und/oder physikalische Eigenschaften von Materialpaarungen optimiert werden. Auch kann z.B. mit einem preisgünstigen Haft-Kunststoff ein Reduzieren einer benötigten Menge eines spezielleren und teureren Kunststoffs für eine Deckschicht erfolgen.

Bevorzugterweise erfolgt nach dem Aufbringen ein aktives Kühlen der formschlüssigen Verbindung zwischen dem Endlosprofil und dem Kunststoffmaterial. Damit kann z.B. ein schneller Übergang von eine plastischen in eine starre Phase bei Thermoplasten erzielt werden und eine Formstabilität des Hybridprofils sichergestellt werden.

Vorzugsweise kann nach dem Schritt e) ein Zuschneiden des Hybridprofils mit der formschlüssigen Verbindung zwischen dem Endlosprofil und dem Kunststoffmaterial erfolgen, insbesondere mit einer Trenn- oder Schneideeinrichtung, speziell einer fliegenden Säge. Damit kann das fertige, endlose Hybridprofil in weiterverarbeitbare, bzw. lagerbare Längen bereitgestellt werden.

Bevorzugterweise ist das Kunststoffmaterial eine Kunststoffschmelze, welche im Schritt c) bevorzugt mithilfe eines Extrusionsarbeitsschritts z.B. aus Kunststoffgranulat erzeugt wird. Alternativ kann das Kunststoffmaterial auch ein Mehrkomponentenkunststoff sein, welcher vorzugsweise derart, an jener Stelle und unter jenen Umgebungsbedingungen gemischt wird, dass dieser in bzw. am Ausgang der Werkzeugkammer derart ausgehärtet ist, dass dieser sein Fliess-Eigenschaften verloren hat bzw. formstabil am Endlosprofil haftet. Dabei kann auch ein Pultrusionsarbeitsschritt oder ein oder Mischarbeitsschritt angewandt werden.

In einer speziellen Ausführungsform der Erfindung kann beispielsweise das Bereitstellen des Kunststoffs als faserverstärkter Kunststoff mithilfe eines Pultrationsverfahrens erfolgen, also in einem Strangziehverfahren eines Kunststoffs mit gleichzeitig eingearbeiteten Faser-Armierungen, in welches erfindungsgemäss auch das Endlosprofil eingearbeitet wird, vorzugswiese in gleichzeitig bzw. im Wesentlichen in einem gemeinsamen Arbeitsschritt. Damit ist ein Hybridisolator mit faserverstärktem Kunststoffmaterial herstellbar, welcher z.B. aufgrund seiner mechanischen Eigenschaften eine weitere Reduktion des Anteils an metallischem Trägerprofil ermöglicht.

Vorzugsweise erfolgt dabei auch ein Bereitstellen zumindest eines zweiten oder weiteren Kunststoffmaterials, wobei ein Beaufschlagen bzw. Überziehen zumindest des Endlosprofil und/oder des ersten Kunststoffs mit dem weiteren Kunststoffmaterial erfolgt. Dabei kann das Beaufschlagen mit den zumindest zwei (erster und weiterer) Kunststoffen im Wesentlichen gleichzeitig bzw. unmittelbar (z.B. zeitlich innerhalb von wenigen Sekunden oder Bruchteilen von Sekunden oder räumlich innerhalb von wenigen Zentimetern oder Millimeter) erfolgen. Dabei erfolgt bei unterschiedlichen Kunststoffmaterialien bevorzugt keine Vermischung der Kunststoffe, sondern zumindest in Teilbereichen ein schichtweises Aufbringen derselben übereinander. Das weitere Kunststoffmaterial kann dabei insbesondere mit speziellen Eigenschaften ausgebildet sein, z.B. mit unterschiedlichen Rezepturen, andere Inhaltstoffen, Farbpigmenten, Füllstoffen, Verstärkungsstoffen, Stabilisatoren, usw.

Beispielsweise kann an der ersten Metallarmierung oder an der ersten Kunststoffschicht eine zweite Kunststoffschicht angeordnet sein, deren Material sich strukturell und/oder funktionell vom Material der ersten Kunststoffschicht unterscheidet. Beispielsweise kann auf die erste Metallarmierung auf einer ersten Seite des Hybridisolators ein Kunststoff flächig angeordnet sein, der stabil ist und auf der gegenüberliegenden Seite ein Kunststoff der besonders korrosionsbeständig ist und/oder seinerseits gut (pulver-) beschichtbar ist.

Bevorzugterweise erfolgt ein Bereitstellen zumindest eines zweiten Endlosprofils, wobei im Schritt e) dieses mit dem ersten Endlosprofil durch zumindest eines der Kunststoffmaterialen formschlüssig und/oder kraftschlüssig bzw. stoffschlüssig (Klebewirkung des Kunststoffs am Metall) verbunden wird.

In einer erweiterten Ausführungsform kann bei oder nach Schritt e) auch ein Kalibrieren des Hybridprofils erfolgen, insbesondere mit zumindest einem Kalibrieren der geometrischen Abmessungen des Hybridprofils, einem aktiven Abkühlen des Hybridprofils (z.B. mit Luft- und/oder Wasserkühlung), einem Glätten, Prägen oder Profilieren einer Oberfläche des Hybridprofils, etc.

Erfindungsgemäss können Teile der Werkzeugkammer auch austauschbar ausbildet sein, sodass unterschiedliche Hybridprofilvarianten herstellbar sind, beispielsweise mit einer Anordnung vom mehren austauschbaren Matrizen, zwischen denen entlang der Bewegungsrichtung des Endlosprofils eine Kavität als eine auszufüllende Hohlform ausgebildet ist, deren Form jener des Hybridprofils entspricht und welche das Endlosprofil abschnittsweise umschliesst.

In zum Verfahren analoger Weise betrifft die Erfindung auch eine Vorrichtung zum kontinuierlichen Herstellen eines Hybridprofils aus einer Trägerstruktur und zumindest einem Kunststoff, z.B. ein Hybridprofil wie in PCT/IB2021/052498 beschrieben.

Es ist speziell eine Vorrichtung welche zur Durchführung eines hier beschriebenen Verfahrens ausgebildet ist. Die Vorrichtung umfasst dabei eine Werkzeugkammer zum Aufnehmen und zum Durchführen eines ersten Endlosprofils. Diese weist zumindest eine Eingangsblende zum Führen des ersten Endlosprofils in die/der Werkzeugkammer und zumindest eines ersten Strömungskanals zum Zuführen eines ersten Kunststoffmaterials in die Werkzeugkammer auf. Die Eingangsbelende hat dabei vorzugsweise die Form eines äusseren Querschnitts des Endlosprofils, sodass dieses formschlüssig umfasst ist. Das Kunststoffmaterial zum Einsatz in dieser Vorrichtung ist flüssig oder plastisch, beispielsweise in Form einer Kunststoffschmelze.
Entsprechend weist die Vorrichtung zumindest ein Kunststoffmaterial-Leitelement in der Werkzeugkammer auf. Dieses Kunststoffmaterial-Leitelement ist dabei derart ausgebildet und ausgeformt, das durch dieses das erste Kunststoffmaterial an einen vorbestimmten Abschnitt des ersten Endlosprofils geleitet wird. Bevorzugt ist das Kunststoffmaterial-Leitelement speziell derart ausgebildet, um einen anderen Abschnitt am Endlosprofil von dem ersten Kunststoffmaterial freizuhalten. Damit ist mit der Vorrichtung eine Hybridprofil bereitstellbar, welches mit den vom Kunststoff freigehaltenen Abschnitten an anderen Bauelementen und/oder Profilen befestigbar ist.

Vorzugsweise weist die Vorrichtung zumindest ein Abdichtelement auf, welches ausgebildet ist, einen weiteren Abschnitt am Endlosprofil von dem ersten Kunststoffmaterial präzise freizuhalten, beispielweise zumindest eine, an der Oberfläche des Endlosprofils anliegende Kante.

Bevorzugterweise weist die Vorrichtung weiters eine Fördereinrichtung zum Fördern des Endlosprofils und/oder des gefertigten Hybridprofils durch die Werkzeugkammer auf, speziell mit einer Antriebseinheit. Damit ist eine kontinuierliche bzw. endlose Herstellung eines Hybridprofils durchführbar.

Vorzugsweise weist die Vorrichtung im Anschluss an die Werkzeugkammer eine Kalibriereinrichtung (insbesondere zur masshaltigen Formung des Hybridprofils) und/oder eine aktive Kühleinrichtung zum Abkühlen des Hybridprofils auf. Dabei weist die aktive Kühleinrichtung bevorzugt eine indirekte Kühleinheit auf, mit der bevorzugt die Kalibriereinrichtung kühlbar ist. Alternativ kann die aktive Kühleinrichtung auch eine direkte Kühleinheit zum Beaufschlagen des Hybridprofils mit einem Kühlmedium aufweisen. Damit kann eine präzise Formgebung und Masshaltigkeit des Hybridprofils nach Abkühlung des Kunststoffs erzielt werden.

Bevorzugt ist bei der Vorrichtung zumindest eine Ausgangsblende vorhanden, welche den Ausgangbereich der Werkzeugkammer abdeckt und das Hybridprofil zur Weiterbearbeitung bereitstellt bzw. führt und/oder freigibt.

Vorzugsweise ist an der Vorrichtung ein Unterdruckbereich vorhanden, der bevorzugt benachbart zur Werkzeugkammer angeordnet ist und durch das erste Endlosprofil durchsetzt wird. Damit kann mittels des Unterdrucks ein zuverlässiges Eindringen des Kunststoffs in Ausnehmungen des Endlosprofils erfolgen.

Mit diesem Verfahren bzw. mit der Vorrichtung ist ein Hybridisolator zum Verbinden von Metallprofilen im Fassaden-, Fenster- oder Türenbau mit zumindest einer Metallarmierung herstellbar, welcher mit zumindest einer ersten Kunststoffschicht beschichtet ist und die erste Metallarmierung bereichsweise aus der ersten Kunststoffschicht herausragt. Die Metallarmierung ist insbesondere aus steifen Endlos-Langblechen mit flächigen Ausnehmungen, welche eine Gitterstruktur ausbilden mit geringem Materialaufwand herstellbar, sodass eine geringe Wärmeleitfähigkeit erzielbar ist. Montageabschnitt können dabei als Vollblech-Bereiche ausgebildet sein bzw. zumindest eine Abkantung zum Aufnehmen eines weiteren Anbauteils aufweisen. Der geringe Materialaufwand resultiert in verminderten Herstellkosten der Hybridisolatoren. Die erste Kunststoffschicht füllt die Ausnehmungen und beschichtet die Metallarmierung speziell in jenen Bereichen, in denen eine reduzierte Wärmeübertragung gewünscht ist, sodass auch Kunststoffmaterial eingespart wird, um die Herstellungskosten des Hybridisolators weiter zu minimieren. Die erste Kunststoffschicht bewirkt eine verbesserte thermische Isolation und verbessert die Stabilität der ersten Metallarmierung.

Das Verfahren bzw. die Vorrichtung, speziell die Werkzeugkammer kann dabei speziell derart ausgebildet sein, dass vorzugsweise ist zumindest eine weitere Metallarmierung vorhanden ist, welche zumindest bereichsweise mit einer weiteren Kunststoffschicht beschichtet ist, wobei die erste und die weitere Metallarmierung voneinander beabstandet angeordnet sind und zumindest ein erster Kunststoffsteg vorhanden ist, welcher die erste und die weitere Kunststoffschicht miteinander verbindet. Die weitere Metallarmierung kann die funktionellen und/oder strukturellen Eigenschaften der ersten Metallarmierung aufweisen, wie zuvor beschrieben. Der so geschaffene Hybridisolator mit zumindest zwei Metallarmierungen bildet eine Kastenstruktur mit einer verbesserten Steifigkeit aus. Zusätzlich ist ein Aufnahmeraum in der Kastenstruktur ausgebildet, in dem zumindest ein Anbauteil, beispielsweise ein Schloss oder ein Beschlag, stabil positionierbar ist und/oder die eine Reduktion der Luft-Konvektion in im Hybridisolator bewirkt. Die weitere Metallarmierung ist mit geringem Materialaufwand herstellbar. Der geringe Materialaufwand resultiert in verminderte Wärmeleitfähigkeit der Hybridisolatoren. Die weitere Kunststoffschicht beschichtet die weitere Metallarmierung nur in jenen Bereichen, in denen eine reduzierter Wärmeübertragung im Vergleich zu Metall/Stahl gewünscht ist, sodass auch Kunststoffmaterial eingespart wird. Bevorzugterweise ist zumindest ein erster Kunststoffsteg senkrecht zur ersten und weiteren Metallarmierung angeordnet. Damit ist die Formstabilität in der Kastenstruktur verbessert. Der zumindest eine erste Kunststoffsteg kann mit der ersten und der weiteren Kunststoffschicht stoffschlüssig verbunden. Damit kann auf separate Befestigungsmittel verzichtet werden, sodass die Montage vereinfacht wird und die Druckstabilität in der Kastenstruktur weiter verbessert.

Kunststoffsteg und Kunststoffschicht können dabei aus demselben Kunststoffmaterial sein und in einem Prozess mit dem Formschlüssigen Verbinden e) hergestellt werden, speziell mit einer entsprechend ausgeformten Werkzeugkammer. Dabei kann zumindest ein weiterer Kunststoffsteg vorhanden sein, welcher die erste und die weiteren Kunststoffschicht miteinander verbindet. Damit wird ein verbesserter Aufnahmekasten für Anbauteile geschaffen, sodass die Anbauteile stabil in der Kastenstruktur des Hybridisolators positionierbar sind. Bevorzugt ist der weitere Kunststoffsteg benachbart und beabstandet zum ersten Kunststoffsteg angeordnet, sodass die Anbauteile an mehreren Auflagepunkte fixierbar sind. Am Hybridprofil kann z.B. zumindest eine Kunststoffstrebe vorhanden sein, mit dem erfindungsgemässen Verfahren mit einem entsprechend Ausformen der Werkzeugkammer hergestellt ist welche zumindest eine der Kunststoffschichten mit dem ersten Kunststoffsteg verbindet und somit verspreizt bzw. verstrebt, sodass die Druckstabilität und/oder die Zugstabilität weiter verbessert ist.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung beschrieben sind.

Die Bezugszeichenliste ist wie auch der technische Inhalt der Patentansprüche und Figuren Bestandteil der Offenbarung. Die Figuren werden zusammenhängend und übergreifend beschrieben. Gleiche Bezugszeichen bedeuten gleiche Bauteile, Bezugszeichen mit unterschiedlichen Indices geben funktionsgleiche oder ähnliche Bauteile an. Aufzählungen wie erste, zweite,.. weitere dienen lediglich zur Unterscheidung von Bauteilen, geben den Bauteilen jedoch kein besonderes Gewicht/ keine besondere Bedeutung in der Gesamtkonstruktion.

Es zeigen dabei:
- Fig. 1: eine erste Ausführungsform eines erfindungsgemässen Hybridprofils in einer perspektivischen Ansicht,
- Fig. 2: das Hybridprofil gemäss Fig. 1 in eine Querschnitts-Ansicht entlang der Richtung A-A,
- Fig. 3: eine weitere Ausführungsform eines Hybridprofils in der Querschnitts-Ansicht,
- Fig. 4: eine weitere Ausführungsform eines Hybridprofils in einer Querschnitts-Ansicht,
- Fig. 5: eine weitere Ausführungsform eines Hybridprofils in einer Schnittansicht entlang der Richtung A-A als profilierte Struktur,
- Fig. 6: ein Beispiel eines erfindungsgemässes Verbundprofilsystem in einer perspektivischen Ansicht mit einem Hybridprofil gemäss Fig. 2,
- Fig. 7: eine Ausführungsform einer erfindungsgemässen Vorrichtung für des erfindungsgemässe Verfahren betrachtet in Einzugs-/Einschiebe-Richtung der Endlosprofile.
- Fig. 8: die Ausführungsform von Fig. 7 in einer Vollschnitt-Ansicht von oben,
- Fig. 9: die Ausführungsform von Fig. 7 in einer Teilschnitt-Ansicht in Richtung Ausgang aus der Werkzeugkammer für das Hybridprofil,
- Fig. 10: eine Detailansicht der Werkzeugkammer gemäss Fig. 8 in einer Schnittdarstellung,
- Fig. 11a bis 11c: Detailansichten eines ersten Werkzeugkammer-Elements aus Fig. 10,
- Fig. 12a bis 12c: Detailansichten eines zweiten Werkzeugkammer-Elements aus Fig. 10,
- Fig. 13a bis 13d: Detailansichten eines dritten Werkzeugkammer-Elements aus Fig. 10,
- Fig. 14a und 14b: Detailansichten einer Ausführungsform mit mehreren Kunststoffmaterialien bei werkzeugkammer-externer Aufbringung,
- Fig. 15: eine Ausführungsform einer erfindungsgemässen Kalibriereinrichtung für das Hybridprofil, welche optional im Anschluss an die Werkzeugkammer angeordnet sein kann,
- Fig. 16: eine Ansicht eines Hybridprofils bei Austritt aus der Werkzeugkammer,
- Figs. 17a bis 17c: Detailansichten eines vierten Werkzeugkammer-Elements aus Fig. 10,
- Fig. 18: eine vergrösserte Detailansicht einer Ausführungsform eines erfindungsgemässen, abschnittsweisen Beaufschlagens bei einem Herstellverfahren eines Hybridprofils,
- Fig. 19a und 19b: eine perspektivische Ansicht der Werkzeugkammer und einen Teilschnitt davon in Vergrösserung.

Die **Fig. 1** zeigt eine erste Ausführungsform eines erfindungsgemäss hergestellten Hybridisolators 20 zum Verbinden von Metallprofilen im Fassaden-, Fenster- oder Türenbau mit zwei Metallarmierungen 26, die als Langblech ausgebildet ist. Eine der Metallarmierungen 26 umfasst einen ersten Befestigungsabschnitt 27 und einen zweiten Befestigungsabschnitt 27a, welche einander gegenüberliegend an der Metallarmierung 26 ausgebildet/freigelassen sind. Die Metallarmierung 26 weist im Übrigen eine Gitterstruktur 28a auf und einen Montageabschnitt 24a zum Montieren von Anbauteilen, wobei der Montageabschnitt 24a in diesem Beispiel mittig zwischen dem ersten Befestigungsabschnitt 27 und dem zweiten Befestigungsabschnitt 27a angeordnet ist. Der Montageabschnitt 24a ist Teil des Langblechs und ist frei von Gitterstruktur.

Metallarmierungen 21/26 werden als Endlos-Langbleche hergestellt, bspw. mithilfe eines Walzverfahrens. Das Langblech weist z.B. eine Blechstärke d (Fig.3) von 0.5 mm auf. Die Metallarmierung 21 ist entlang "einer Längsrichtung" des Langblechs für eine ersichtlichere Darstellung abschnittsweise mit einer Kunststoffschicht 35 beschichtet und ragt an mehreren Bereichen aus der Kunststoffschicht 35 heraus. Speziell die Befestigungsabschnitte 22, 22a, 27 und 27a sind - entsprechend des erfindungsgemässen Verfahrens freigelassene - Abschnitte des Endlosprofils 21 bzw. 26, welche gesteuert nicht mit dem Kunststoffmaterial 35 beaufschlagt sind. Zur anschaulichen Darstellung der Struktur des Trägermaterials ist hier das Endlosprofil der Trägerstruktur, welche die Armierung 21 ausbildet in Ihrer Längsrichtung bzw. Endlosrichtung aus dem Kunststoffmaterial 35 herausragend dargestellt (Der Kunststoff ist dort in der Darstellung weggelassen), speziell um die beispielhafte, strukturelle Ausführung des Endlosprofils mit dessen Gitterstruktur 28 mit dessen Montageabschnitten 24 und/oder Befestigungsabschnitten 22, 22a sichtbar zu machen. Eine derartige Ausführungsform ist erfindungsgemäss zwar auch möglich, indem längenweise Kunststoff nicht beaufschlagt würde, bevorzugterweise erstreckt sich das Kunststoffmaterial 35 am Hybridprofil jedoch über dessen gesamte Längsrichtung, insbesondere mit einer kontinuierlichen Querschnittsfläche, wie diese im Folgenden nochmals explizit angegeben wird.

**Fig. 2** zeigt eine Schnittansicht in A-A Richtung einer Variante eines erfindungsgemäss hergestellten Hybridprofils 20 (auch als Hybridisolator bezeichnet) unterschiedlich zur Variante wie in Fig. 1 dargestellt. Der Hybridisolator 20b weist, neben der auch in Fig. 3 nochmals detaillierter beschriebenen ersten Metallarmierung 21, eine weitere Metallarmierung 26 auf, welche zumindest bereichsweise mit der ersten Kunststoffschicht 35 beschichtet ist. Damit bildet der Hybridisolator 20b eine Kastenstruktur 30 aus. Die weitere Metallarmierung 26 umfasst einen ersten Befestigungsabschnitt 27 und einen zweiten Befestigungsabschnitt 27a, welche gegenüberliegend an der Metallarmierung 26 angeordnet sind. Die Metallarmierung 26 weist eine Gitterstruktur 28a mit Gitteröffnungen 29a auf und einen relativ breiten Montageabschnitt 24a zum Montieren von Anbauteilen, wobei der Montageabschnitt 24a mittig zwischen dem ersten Befestigungsabschnitt 27 und dem zweiten Befestigungsabschnitt 27a angeordnet ist. Der Montageabschnitt 24a ist Teil des Langblechs/Endlosblechs und ist frei von der Gitterstruktur 28a. Die beiden Metallarmierungen 21, 26 sind voneinander beabstandet angeordnet. Es sind zwei Kunststoffstege 40, 42 vorhanden, welche ebenfalls aus der ersten Kunststoffschichten 35 bestehen und einen Aufnahmeraum 31 in der Kastenstruktur 30 ausbilden. Die zwei Kunststoffstege 40, 42 sind senkrecht zur ersten und weiteren Metallarmierung 21, 26 angeordnet und sind stoffschlüssig/einstückig mit der ersten Kunststoffschicht 35 verbunden, wobei das Kunststoffmaterial identisch mit dem Kunststoffmaterial der ersten Kunststoffschicht 35 ist. Der Hybridisolator 20b weist mehrere Kunststoffstreben 43a, b, c, d auf, welche zumindest die ersten Kunststoffschichten 35a, 37a mit den Kunststoffstegen 40, 42 verbinden und ebenfalls aus identischen Kunststoffmaterial bestehen, sodass die zuvor genannten Kunststoffelemente einteilig ausgebildet sind. Sie können auch einen glasfaserverstärkten Kunststoff umfassen. Die Kastenstruktur 30, speziell deren Aussenseite, ist wärmeresistent und korrosionsresistent sowie bei Bedarf beschichtbar.

**Fig. 3** zeigt eine Schnittansicht des Querschnitts (orthogonal zur Endlosrichtung) einer anderen Ausführungsform eines erfindungsgemäss hergestellten Hybridprofils, welches nicht wie zuvor als Kastenprofil, sondern als Flachprofil ausgeführt ist. Die Metallarmierung 21 des Hybridisolators 20a ist hier ebenso ein Stahllangblech. Das Kunststoffmaterial 35, welches die erste Kunststoffschicht 35 bildet, ist beidseitig an der Metallarmierung 21 angeordnet und beschichtet diese abschnittsweise, wobei sich die erste Kunststoffschicht 35 im Bereich der Gitterstruktur 28 durch Gitteröffnungen oder Ausschnitte 29 hindurch erstreckt. Die erste Kunststoffschicht 35 weist in diesem Beispiel eine Schichtdicke D von ca. 2.5 mm auf, wobei die Metalldicke d ca. 0.8 mm beträgt.

**Fig. 4** zeigt eine Schnittansicht in A-A Richtung eines erfindungsgemäss hergestellten Hybridisolators, ähnlich wie in Fig. 3 dargestellt, in einer weiteren Ausführungsform. Die Metallarmierung 21 des Hybridisolators 20c ist ein Stahllangblech. An der Metallarmierung 21 sind eine erste Kunststoffschicht 35a und eine weitere Kunststoffschicht 35b angeordnet, wobei die erste Kunststoffschicht auf der ersten Seite der Metallarmierung 21 angeordnet ist und die zweite Kunststoffschicht 35b auf der zweiten Seite der Metallarmierung 21 angeordnet ist. Beide Kunststoffschichten 35a, 35b beschichten die Metallarmierung 21 abschnittsweise, wobei sich die erste Kunststoffschicht 35a und/oder die zweite Kunststoffschicht 35b im Bereich der Gitterstruktur 28 in die Gitteröffnungen 29 hinein erstreckt. Die zweite Kunststoffschicht 35b ist flächig auf der gegenüberliegenden Seite angeordnet und liegt im Bereich der Gitteröffnungen 28 an der ersten Kunststoffschicht 35a an, wobei die beiden Kunststoffschichten 35a, 35b zumindest abschnittsweise ineinander verlaufen bzw. stoffschlüssig verfliessen. Die erste Kunststoffschicht 35a weist eine Schichtdicke D1 von 1 mm auf, wobei die Beschichtungsdicke d1 0.5 mm beträgt. Die Schichtdicke und die Beschichtungsdicke d2 der zweiten Kunststoffschicht sind in diesem Ausführungsbeispiel identisch und betragen 0.5 mm. Die erste Kunststoffschicht umfasst glasfaserverstärkte Polyamide zum Beispiel PA6 GF15 oder PA66 GF25 und die zweite Kunststoffschicht ist zum Beispiel eine Polyamid-PA66-Schicht. Die erste und/oder zweite Kunststoffschicht 35a, 35b ist aufgrund ihrer Material-/Oberflächenstruktur pulverbeschichtbar oder mit einem durchsichtigen oder eingefärbten Lack nasslackierbar.

In einer anderen beispielhaften Ausführung weisen die Metallarmierungen 21, 26 z.B. eine Blechstärke von 0.6 mm auf und die ersten Kunststoffschichten 35a, 37a weisen eine Schichtdicke D1 von 1.5 mm auf, wobei die Beschichtungsdicke d1 0.5 mm beträgt. Die Schichtdicke und die Beschichtungsdicke d2 der zweiten Kunststoffschichten 35b, 37b betragen 0.7 mm.

In allen Ausführungsformen eines erfindungsgemässen Hybridprofils kann das Endlosprofil der Trägerstruktur, welche auch als Armierung oder Metallarmierung 21 bezeichnet wird, optional auch mehrteilig und oder in ihrem Querschnitt profiliert ausgebildet sein. Beispielsweise können die Endlosprofile Abkantabschnitte aufweisen, teilweise überlappend angeordnet sein, oder auch voneinander beanstandet, z.B. als schmale Streifen nur im Bereich der Befestigungsabschnitte 22, 22a eingebracht sein.

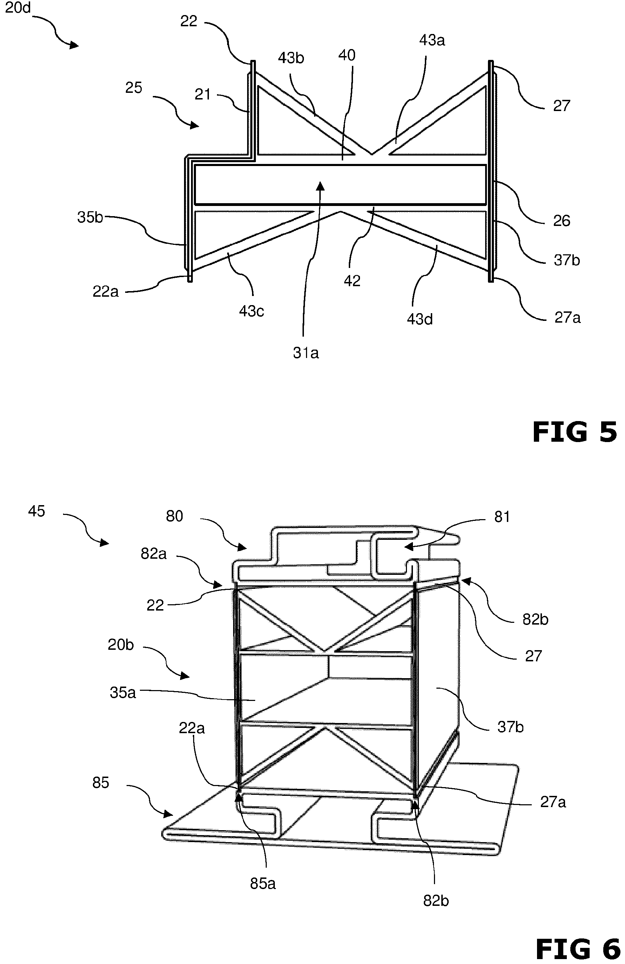

**Fig. 5** zeigt eine weiteren Ausführungsform eines erfindungsgemäss hergestellten Hybridisolators bzw. eines Hybridprofils 20d, welcher sich von den vorher gezeigten dahingehend unterscheidet, dass eine Abkantung 25 vorhanden ist, welche an der ersten Metallarmierung 21 ausgebildet ist. Die Abkantung 25 kann z.B. zum Aufnehmen eines Fensterbeschlags (nicht gezeigt) dienen und bildet einen Teilbereich einer Nut (z.B. Euronut) aus. Die Abkantung 25 ist aussermittig an der ersten Metallarmierung 21 angeordnet. Die Abkantung 25 ist mit der zweiten Kunststoffschicht 35b beschichtet. Die Kunststoffstege 40, 42 sind näher aneinander angeordnet, sodass ein etwas kleinerer Aufnahmeraum 31a ausgebildet ist. Der erste Kunststoffsteg 40 weist eine dickere Materialstärke auf als der zweite Kunststoffsteg 42. Ansonsten ist der Hybridisolator 20d strukturell und funktionell gleich aufgebaut wie der Hybridisolator 20b gemäss den Fig. 4 und Fig. 5.

In einer nicht gezeigten Ausführungsform kann diese Abkantung auch an einer anderen Position der ersten Metallarmierung angeordnet sein, beispielsweise mittig zwischen dem ersten Befestigungsabschnitt 22 und dem zweiten Befestigungsabschnitt 22a. In einer weiteren Ausführungsform kann der Hybridisolator 20d strukturell und funktionell gleich aufgebaut sein wie der Hybridisolator 20b gemäss der Fig. 2 (welcher hier nur ohne Abkantung gezeigt ist).

**Fig. 6** zeigt ein Beispiel eines mit erfindungsgemäss hergestellten Hybridprofilen hergestellten Verbundprofilsystem 45 a, b mit einem ersten Metallprofil 80 und einem weiteren Metallprofil 85 sowie dem Hybridprofil 20b gemäss den Fig. 2. Das Verbundprofil 45b weist den Hybridisolator 20b gemäss Fig. 2 auf, der eine vollumfängliche Beschichtung mit den Kunststoffmaterial 35a, 35b, 37a, 37b an den Metallarmierungen 21, 26 aufweist. Zumindest die Befestigungsabschnitte 22, 22a, 27, 27a sind frei von einer Kunststoffschicht. Die Metallprofile 80, 85 bestehen aus Metall, z.B. Stahl und sind in sich geschlossen, sodass sie jeweils ein geschlossenes Hohlprofil ausbilden. Das Metallprofil 80 weist eine Aufnahmenut 81 zum Aufnehmen einer Glasleiste auf. Das Metallprofile 80 weist zwei Montagenuten 82a, 82b auf, in denen die ersten Befestigungsabschnitte 22, 27 der Metallarmierungen 21, 26 angeordnet sind und verschweisst sind. Das Metallprofile 85 weist zwei Montagenuten 85a, 85b auf, in denen die ersten Befestigungsabschnitte 22a, 27a der Metallarmierungen 21, 26 angeordnet sind und verschweisst sind.

In weiteren Ausführungsformen von erfindungsgemässen Verbundprofilsystemen 45 sind zwischen den Metallprofile 80, 85 die Hybridisolatoren 20a, 20c oder 20d angeordnet (was hier nicht in jeder möglichen Kombination explizit gezeigt ist), wie für den Fachmann ersichtlich.

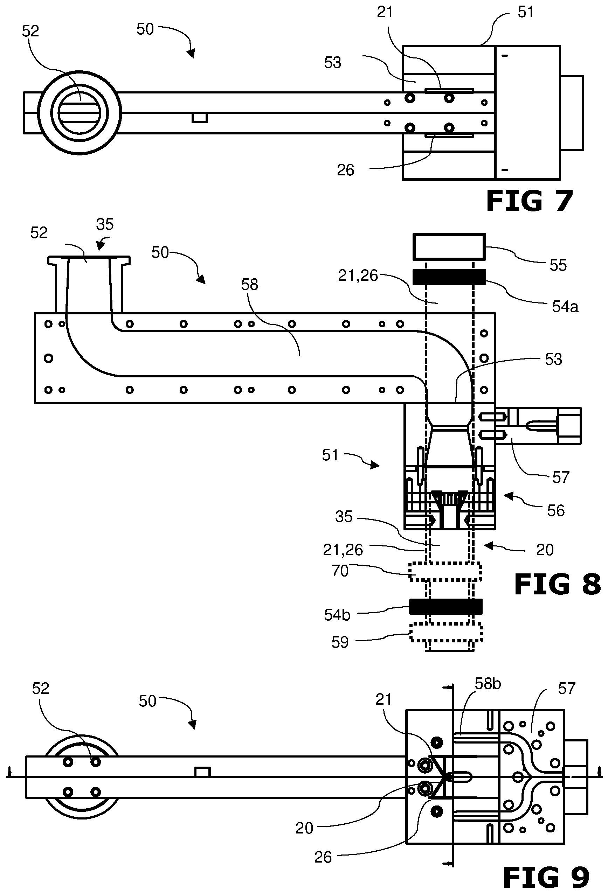

**Fig. 7** zeigt eine Ausführungsform einer erfindungsgemässen Vorrichtung 50 zur Durchführung des erfindungsgemässen Verfahrens. Die Vorrichtung 50 ist hier von jener Seite gezeigt, von welcher her das Bewegen des Endlosprofils 21,26 zum bzw. durch die Werkzeugkammer 51 erfolgt. In dieser Ausführungsform werden zwei Endlosprofile 21,26 mittels dazwischen geformtem Kunststoffprofil zu einem gemeinsamen Hybridprofil verarbeitet. Dabei weist die Vorrichtung 50 einen Eingangsblende 53 für die Endlosprofile 21,26 auf, welche diese formschlüssig umschliesst bzw. als Führung für die Endlosprofile dient. Die Öffnung dieser Eingangsblende 53 hat dieselbe Form wie der Querschnitt des Endlosprofils 21,26 und erlaubt mit geringer Toleranz das Einschieben der Endlosprofile. Die Öffnung ist somit geringfügig (z.B. etwa einig Hundertstel- oder Zentel-Millimeter oder einige Millimeter) grösser als der Querschnitt des Endlosprofils 21,26. Gezeigt ist auch die Kunststoffbereitstellungseinrichtung 52, welche zum Bereitstellen des ersten Kunststoffmaterials ausgebildet ist. Diese ist insbesondere zum Bereitstellen eines flüssigen oder plastischen Kunststoffs ausgebildet, beispielsweise ein erwärmtes Thermoplast-Material (z.B. als Kunststoffschmelze) oder einer Mischung von Komponenten eines Mehrkomponenten-Kunststoffs. Dabei können hierfür bekannte Prozesse, Technologien, Module oder Baukästen zum Einsatz kommen.

**Fig. 8** zeigt die Vorrichtung in Draufsicht, also orthogonal zur Richtung des Bewegens des Endlosprofils 21,26. Das Einschieben bzw. Durchziehen der Endlosprofile 21, 26 kann z.B. mit zumindest einer Förder- oder Antriebseinrichtung 54a und/oder 54b erfolgen, welche vor, an, nach und/oder in der Vorrichtung 50 ausgebildet ist, beispielsweise Walzen, Rollen, Greifern umfasst oder andere herkömmliche Profil- bzw. Band-Fördermethoden. Optional kann das Bereitstellen des Endlosprofils auch noch ein Konditionieren des Endlosprofils umfassen, welches vor dem Einlaufen des Endlosprofils durchgeführt wird. Beispielsweise kann das Konditionieren mit einem Begradigen, Glätten, Stanzen, Schneiden, Walzen, Zuschneiden, Entfetten, Reinigen, Sandstrahlen, Haftbeschichten, Ausbilden einer zumindest teilweisen Gitterstruktur mit Ausnehmungen, Abwickeln von einer Rolle und/oder Verbinden von Enden des Rollenmaterials zu einem echten Endlosprofil, etc. umfassen. In der Figur ist entsprechend ein Block 55 als Bereitstellungs- und/oder Konditionier-Einheit symbolisiert. Das Endlosprofil 21,26 läuft durch die Werkzeugkammer 51, in oder nach der, ein Beaufschlagen mit dem Kunststoffmaterial erfolgt. Dabei erfolgt ein Leiten des Kunststoffmaterials von der Kunststoff-Bereitstellungseinheit 52 hin zum Endlosprofil 21,26 mit einem oder mit mehreren, vorzugsweise beheizten bzw. temperierten Kanälen 58. Im Anschluss an die Werkzeugkammer 51 kann (neben einer Förder- oder Antriebseinrichtung 54b) optional eine Kalibriereinheit 70 folgen, in welcher das Hybridprofil z.B. gekühlt und/oder Masshaltig in seine endgültige Form gebracht wird. Weiters kann auch eine Trenn- oder Schneideeinrichtung 59 das fertige Hybridprofil zu Stücken in vordefinierten Längen ablängen. sodass diese abtransportiert werden können.

Die Werkzeugkammer 51 ist hier gezeigt mit einer optionalen Einbringeinrichtung 57 für ein zweites, unterschiedliches oder gleiches Kunststoffmaterial. Optional kann dabei auch eine Unterdruckeinrichtung zum Aufbringen eines Unterdrucks zum Teil-Vakuumieren von Ausnehmungen im Endlosprofil 21,26 vorhanden sein wie diese an anderer Stelle im Detail beschrieben ist.

**Fig. 9** zeigt die Vorrichtung 50 mit Blick zur Ausgangsseite des Hybridprofils 20. Dieses weist hier eine Kammer-Struktur aus dem Kunststoffmaterial 35 auf, in welche zwei Endlosprofile 21,26 derart integriert sind (im Bild oben und unten), dass diese nur abschnittsweise und nicht vollumfänglich mit dem Kunststoffmaterial beaufschlagt sind, also kunststofffrei bleibende Abschnitte aufweisen. Dabei ist die Werkzeugkammer entsprechend ausgebildet und ausgeformt, um ein solches Hybridprofil 20 an dessen Ausgangsseite bereitzustellen. Bei dem hier gezeigten Beispiel sind beim Hybridprofil 20 insbesondere jeweils die Randbereiche des Endlosprofils 21,26 durch die Werkzeugkammer 51 als nicht mit Kunststoff 35 beaufschlagte Abschnitte ausgebildet. In der gezeigten Ausführungsform ist eine optionalen Einbringeinrichtung 57 gezeigt, mit welcher optional ein Deckschickt aus einem zweiten Kunststoffmaterial 35a,35b abschnittsweise, in diesem Beispiel nur aussen (Ähnlich Fig. 4) auf das Endlosprofil 21, 26 bzw. vorzugsweise auf eine darunterliegende Schicht des ersten Kunststoffmaterials 35 aufgebracht wird. Dabei erfolgt vorzugsweise ein Steuern oder Regeln der Zufuhrmenge oder des Zufuhrdrucks des ersten und/oder zweiten Kunststoffmaterials derart, dass die gewünschten Schichtdicken der Kunststoffmaterialen erzielt werden.

Durch diese zweilagige Beschichtung an der Aussenseite werden insbesondere Witterungsfestigkeit, Farbgebung odgl. bewirkt.

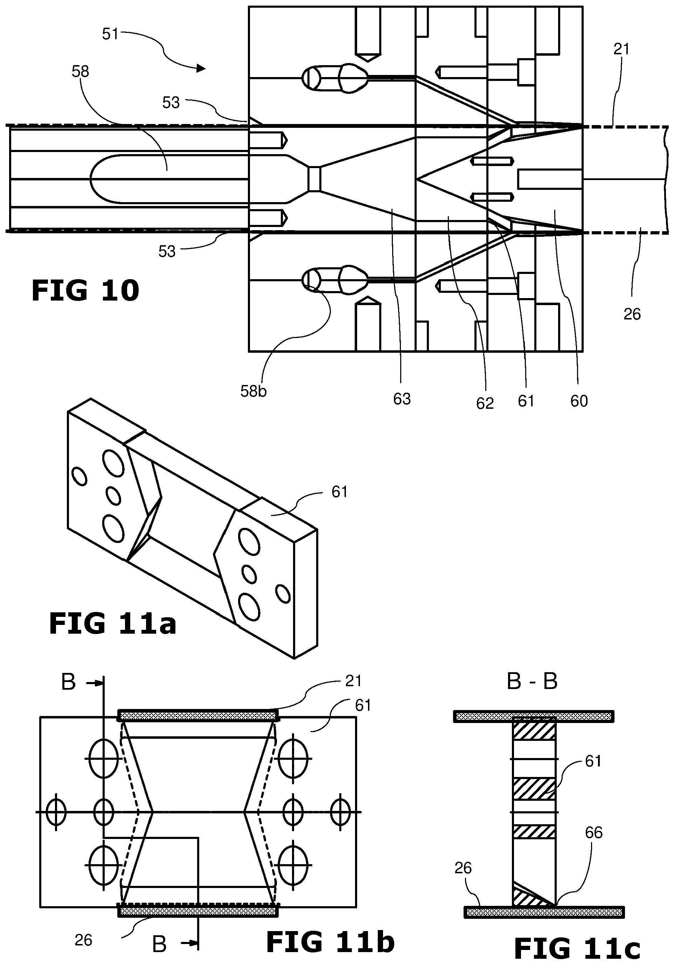

**Fig. 10** zeigt die Werkzeugkammer 51 von zuvor in einer anderen, vergrösserten Schnittdarstellung, welche von den zwei Armierungen oder Trägermaterialen 21 und 26 durchlaufen wird. Von der Zuführung 58 des ersten Kunststoffmaterials werden die beiden Endlosprofile21,26 dabei in Ihrem Zwischenraum mit einer durch die Werkzeugkammer 51 definierten Formgebung mit dem ersten Kunststoffmaterial 35 beaufschlagt, sodass die Endlosprofile 21,26 miteinander durch Stege oder Streben aus dem ersten Kunststoffmaterial 35 verbunden sind, und die Endlosprofile 21,26 nur abschnittsweise beaufschlagt sind. Dabei wird auch jeweils die Aussenseiten der Endlosprofile 21,26 abschnittsweise mit dem ersten Kunststoffmaterial beaufschlagt und beschichte, sodass Ausnehmungen (z.B. Gitterstrukturen) der Fläche der Endlosprofile 21,26 vom ersten Kunststoffmaterial gefüllt sind. Die Formgebung und/oder entsprechende Leitung des Kunststoffmaterials erfolgt dabei speziell über die Leitelemente 63, 62 und 61. Hier gezeigt ist auch die Zuführung 57 eines zumindest zweiten, andersartigen Kunststoffmaterials 35b, welches beispielsweise eine Oberfläche mit einer besonderen physikalischen, optischen oder chemischen Eigenschaft bereitstellt. Diese kann in dieser optionalen Ausführungsform durch entsprechendes Ausformen der Werkzeugkammer 51 als Deckschicht auf eine Haft- und/oder Verbindungsschicht aus dem ersten Kunststoffmaterial aufgebracht werden.

**Fig. 11a bis Fig. 11c** zeigen verschiedene Ansichten einer beispielhaften Ausführungsform eines Teilbereichs 61 der oben beschriebenen Werkzeugkammer 51, welcher auch als Leitelement für das Kunststoffmaterial 35 bezeichnet wird. Es ist ausgebildet um erfindungsgemäss das Endlosprofil 21,26 in gesteuerter Weise nur abschnittsweise mit dem ersten und zweiten Kunststoffmaterial 35, 35a zu beaufschlagen. Hier zeigt sich ein grosser Unterschied zu herkömmlichen Beschichtungsverfahren zur Herstellung von Hybridprofilen, bei denen jeweils die ganze Trägerstruktur vollumfänglich beschichtet wird. **Fig 11a** zeigt dabei eine perspektivische Ansicht, **Fig. 11b** eine Draufsicht und **Fig. 11c** eine Schnittansicht entlang der Linie B-B aus Fig. 11b. Speziell erfolgt dabei das Kunststoff-Beaufschlagen an bzw. im Bereich der Kante 66.

Mit einem Abschnittsweisen umfassen des Endlosprofils an seinen Rändern durch Formelemente in der Werkzeugkammer, kann dabei ein gesteuertes Beaufschlagen von Abschnitten mit Kunststoffmaterial erzielt werden. Beispielsweise können die Längskanten eines Blechbandes als Trägermaterial, während dem Beaufschlagen mit Kunststoff durch ein abschnittweises Umschliessen mit einer U-Förmigen Ausnehmung in der Werkzeugkammer von Kunststoffmaterial freigehalten werden. Dabei kann insbesondere formschlüssiges Abdichten des nicht zu beaufschlagenden Abschnitts erfolgen, beispielsweise mit einem Führen dieses Abschnitts des Endlosprofils in einer entsprechenden Negativform, welche eine geringe Mass-Toleranz gegenüber dem Endlosprofil und/oder mit bekannten Dichtungs-Ausführungen oder Dichtelement ausgebildet ist. Optional kann dabei auch ein federndes Anpressen eines Freihalte-Elements der Werkzeugkammer auf den Kunststofffrei zu haltenden Abschnitt erfolgen, sodass besagter Abschnitt des Endlosprofils an diesem Freihalte-Element anliegend vorbeigleitet, womit ein Eindringen des Kunststoffmaterials zwischen dem Freihalte-Element und dem Endlosprofil unterbunden wird. Die Beaufschlagung der Trägerstruktur mit Kunststoff erfolgt dabei nur in Abschnitten ausserhalb eines solchen Freihalte-Elements der Werkzeugkammer.

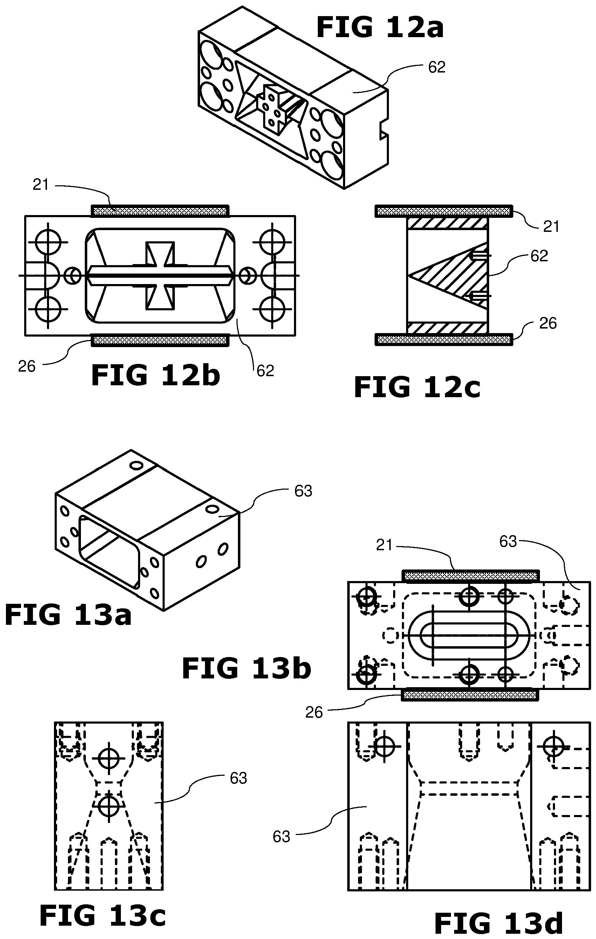

**Fig. 12a bis Fig. 12c** zeigen verschiedene Ansichten einer beispielhaften Ausführungsform eines Teilbereichs 62 der Werkzeugkammer 51 von Fig. 10, welcher auch als Leitelement für das Kunststoffmaterial 35 bezeichnet wird, und ausgebildet ist, um erfindungsgemäss das Endlosprofil 21,26 nur in gesteuerter Weise und nur abschnittsweise mit dem ersten und zweiten Kunststoffmaterial 35, 35a zu beaufschlagen. **Fig 12a** zeigt dabei eine perspektivische Ansicht, **Fig. 12b** eine Draufsicht und **Fig. 12c** eine Schnittansicht entlang der Linie B-B aus Fig. 11b. Speziell erfolgt dabei eine Formgebung einer inneren hohlen Kammer bzw. Stegen in dem Kunststoffmaterial 35 zwischen den Endlosprofilen, vorzugsweise mit zumindest annähernd konstanten Materialstärken und mit einer stoffschlüssigen Verbindung (Klebung/Haftung) zu dem das Endlosprofil 21, 26 beaufschlagenden Kunststoffmaterial 35.

**Fig. 13a bis Fig. 13d** zeigen verschiedene Ansichten einer beispielhaften Ausführungsform eines Teilbereichs 63 der Werkzeugkammer 51 von zuvor, welcher auch als Leitelement für das Kunststoffmaterial 35 bezeichnet wird, und ausgebildet ist, um erfindungsgemäss das Endlosprofil 21,26 nur in gesteuerter Weise nur abschnittsweise mit dem ersten und zweiten Kunststoffmaterial 35, 35a zu beaufschlagen. **Fig 13a** zeigt dabei eine perspektivische Ansicht, **Fig. 13b** eine Draufsicht und **Fig. 13b** einen Grundriss und **Fig. 13d** einen Seitenriss, jeweils mit verdeckten Linien unterbrochen eingezeichnet.

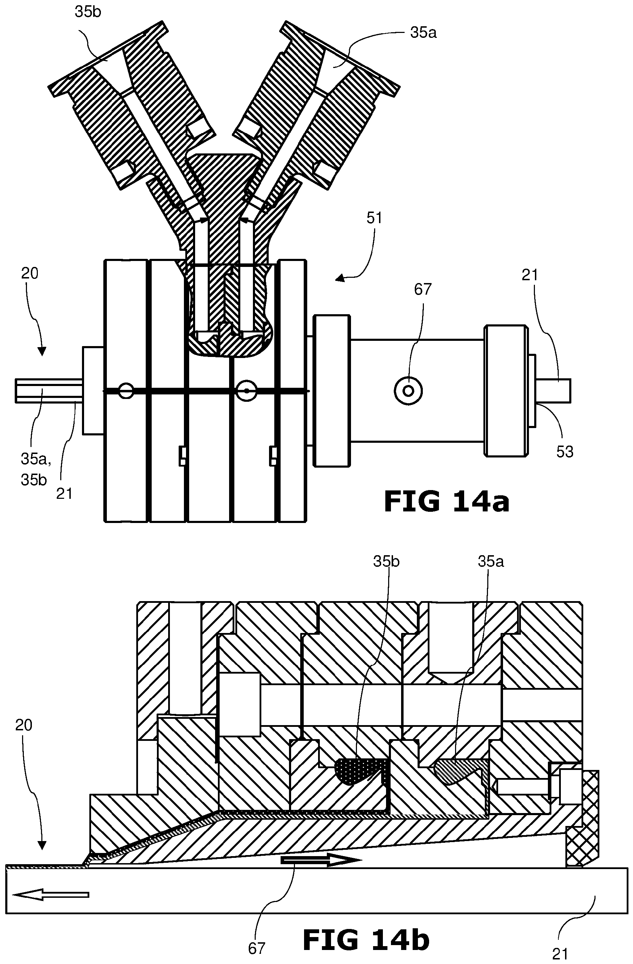

**Fig. 14a** und **Fig. 14b** zeigen ein Beispiel einer anderen Ausführungsform eines Zuführens von zumindest einem ersten und zumindest einem zweiten, jeweils gleichen oder unterschiedlichen Kunststoffmaterials 35a, 35b, sowie einem Aufbringen von Unterdruck vor der Beaufschlagung mit den Kunststoffen, wie dieses in Fig. 8 bereits angedeutet ist. Gegenüber der z.B. in Fig. 10 gezeigten abschnittsweisen Beaufschlagung mit Kunststoffmaterial innerhalb der Werkzeugkammer erfolgt in dieser Ausführungsform die abschnittsweise Beaufschlagung mit Kunststoffmaterial ausserhalb der Werkzeugkammer. Dabei werden zwei unterschiedliche Kunststoffmaterialen übereinander aufgebracht, eine Haftschicht 35a und eine Deckschicht 35b.

Die hier teil-beschichtete Trägerstruktur 21 ist ein Vierkantrohr aus Metall oder faserverstärktem Kunststoff. Im Vergleich zu den bisher beschriebenen Aufbauten fehlt hier eine Herstellung von Kunststoffstegen, die zwischen Metallendlosprofilen ausgebildet sind. Hier wird mit der erfindungsgemässen Vorrichtung ein Rohr (allenfalls mit einer Gitterstruktur) ausschliesslich partiell kunststoffbeschichtet.
Im Teilschnitt von **Fig. 14a** ist die Bereitstellung bzw. Zuführung von zwei Kunststoffmaterialien 35a, 35b und dem Endlosprofil 21,26 zu sehen, aus welchem dann nach dem erfindungsgemässen Verfahren das Hybridprofil 20 hergestellt wird, was primär in der Werkzeugkammer 51 erfolgt.
In **Fig. 14b** zeigt der Schnitt dabei den Verlauf der Kunststoffmaterialen 35a, 35b in der Werkzeugkammer 51, und somit deren Pfad bei der Aufbringung auf dem Endlosprofil 21, 26, welches hier wie daraus ersichtlich in zwei übereinanderliegenden Schichten von Kunststoff auf der Trägerstruktur 21,26 erfolgt. Bei der Zuführung der Trägerstruktur 21,26 wird diese dabei mit einem Unterdruck 67 beaufschlagt, welcher Luft aus allfälligen Ausnehmungen bzw. einer allfälligen Gitterstruktur des Endlosprofils abzieht, sodass diese in Folge zuverlässig und vollständig mit Kunststoffmaterial 35a gefüllt werden. Dabei ist der Einlassbereich 53 des Endlosprofils gegen aussen abgedichtet, sodass die Luft aus dem Endlosprofil gesogen wird, bzw. das Kunststoffmaterial beim Beaufschlagen in derartige Ausnehmungen hineingesogen werden. Die gezeigte Öffnung bei 67 kann dazu z.B. mit einer (Teil-)Vakuumpumpe verbunden sein. Dieses Beaufschlagen mit Unterdruck kann in selber Weise auch bei einer Aufbringung innerhalb der Werkzeugkammer erfolgen.

Das Vakuumieren hat auch den Vorteil, dass im Bereich, wo der Kunststoff seine grösster Kunststofftemperatur aufweist, möglichst wenig Luft vorherrscht und somit auch allfällige chemische (oxidative) Reaktionen vermieden werden. Der Unterdruck verbessert auch das Anhaften des Kunststoffs am Metall, selbst wenn dieses keine erkennbaren Ausnehmungen aufweist.

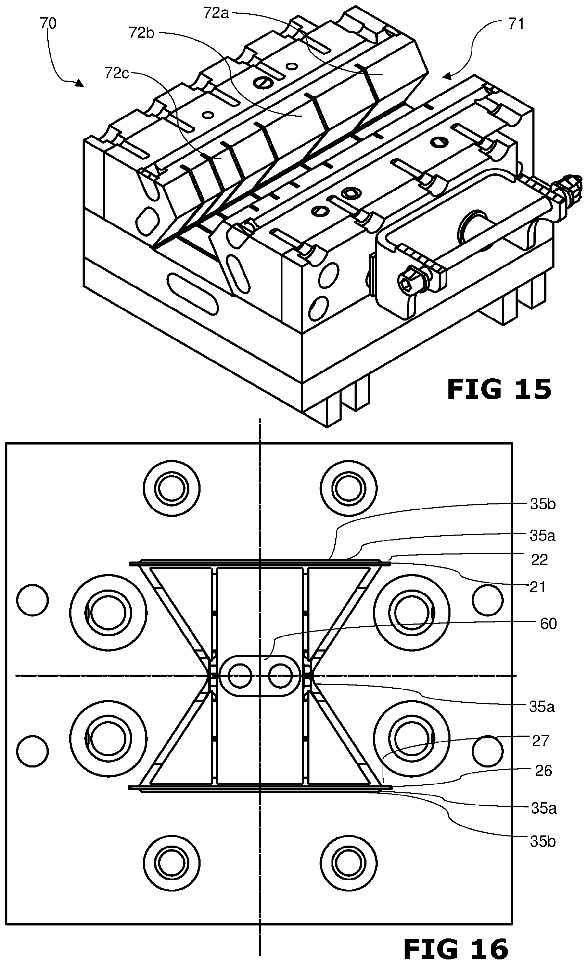

**Fig. 15** zeigt ein Beispiel einer Kalibrier-Einheit 70 in einer Schnittdarstellung, welche in einer erweiterten Ausführungsform nach der Werkzeugkammer 51 angeordnet sein kann. Die Kalibrier-Einheit 70 ist insbesondere auch so ausgebildet, das hergestellte Hybridprofil an seiner Oberfläche abzukühlen und/oder masshaltig in seine exakte Form zu bringen. Beispielsweise kann die Kalibrier-Einheit 70 mit eine Formkanal 71 ausgebildet sein, welcher im inneren mit einer entsprechenden Aussenform ausgebildet ist, sodass beim Durchbewegen ein Formen oder Pressen des Hybridprofils in seine exakten Aussen-Abmessungen (des Querschnitts) bewirkt wird. Die Aussenform des Formkanals 71 kann sich dabei speziell in Bewegungsrichtung des Hybridprofils in Ihrem Querschnitt verjüngen. Vorzugsweise erfolgt dabei auch ein aktives Kühlen des Hybridprofils, sodass der Kunststoff von seiner noch zumindest Teilweise plastischen Phase in eine feste Phase übergeht. Dieses Kühlen kann dabei auch graduell in mehreren Kühlabschnitten 72a, 72b, 72c mit sinkender Temperatur erfolgen. Bei Duroplasten oder Harzen kann im Gegenteil auch ein Erwärmen erfolgen, um ein schnelles Durchhärten des Duroplasts zu unterstützen. Ein aktives Kühlen kann z.B. mit ÖL, Wasser und/oder Luftkühlung erfolgen. Dabei kann z.B. mit dem Bewegen des Hybridprofils aus der Werkzeugkammer mit einem Verjüngen des Aussenquerschnitts ein Formanpassung vorgenommen werden. Auch können dabei Oberflächen entsprechend geglättet und/oder geprägt werden, so dass gewünschte (optisch sichtbare) Oberflächeneffekte entstehen. Das Glätten in Verbindung mit Pressen führt bei den meisten Kunststoffen auch zu einer speziellen Oberflächenhärtung, da die Kunststoffstrukturen unter Druck bzw. bedingt durch den Kalibrierstress anders vernetzen bzw. besser aushärten.

**Fig. 16** zeigt eine Ansicht eines Hybridprofils bei Austritt aus der Werkzeugkammer wie in Fig. 9, jedoch vergrössert und ohne Schnittdarstellung. Das hier hergestellte Hybridprofil entspricht in seinem Querschnitt im Wesentlichen dem Beispiel aus Fig. 2, auf welches für Details verwiesen wird.

Erfindungsgemäss erfolgt dabei ein abdichtendes Führen der Endbereiche 22,27 der Endlosprofile 21, 26 in der Werkzeugkammer, sodass diese Abschnitte bei Austritt aus der Werkzeugkammer nicht mit Kunststoff beaufschlagt sind. An den verbleibenden Abschnitten - in diesem Fall auf einem Großteil der oberen und unteren Fläche des jeweiligen Endlosprofils - wird der erste Kunststoff 35a beaufschlagt, welcher auch eine durch die Werkzeugkammer geformte Hybridprofil-Querschnittsstruktur zwischen den Endlosprofilen ausbildet, und diese zum Hybridprofil verbindet. Dabei dringt das Kunststoffmaterial 35a,35b in allfällige Ausnehmungen bzw. Gitterstrukturen des Endlosprofils ein, sodass sich die Kunststoff-Schichten auf beiden Seiten des Endlosprofils stoffschlüssig miteinander verbinden, womit z.B. eine stabile und dauerhafte Verbindung erzielbar ist. In dieser Ausführungsform ist auf einer äußeren, ersten Kunststoffschicht 35a auf dem Endlosprofil noch eine zweite Schicht eines zweiten Kunststoffmaterials 35b vorgesehen. Dabei kommt dem ersten Kunststoffmaterial 35a die Aufgabe des strukturellen (und z.B. Wärmeisolierenden) Verbinders des Hybridprofils zu und dem zweiten Kunststoffmaterial 35b eine optisch, mechanisch oder chemisch für die geplante Anwendung geeignete Oberfläche bereitzustellen. Dabei kann insbesondere der erste Kunststoff auch kostengünstiger sein als der zweite.

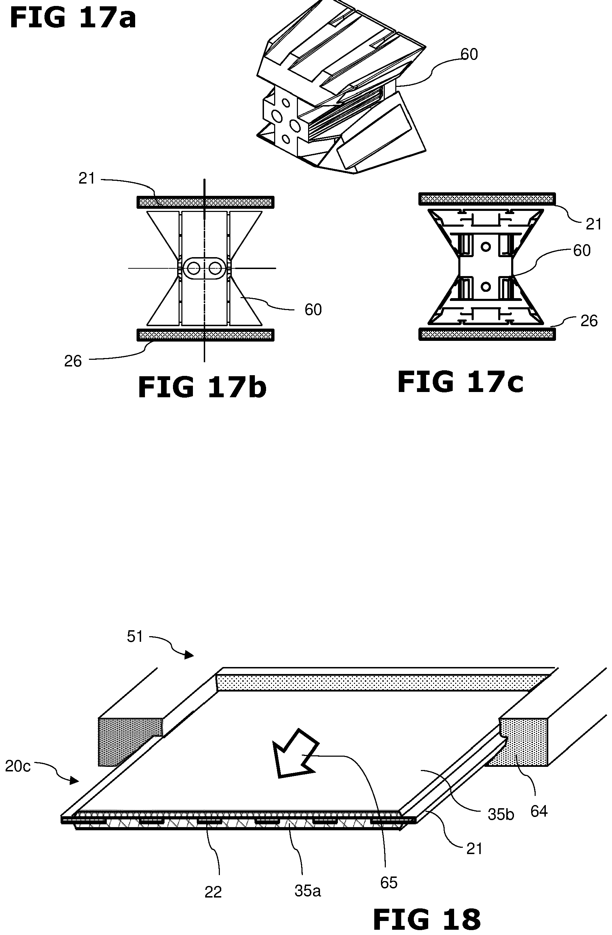

**Figs. 17a bis 17c** zeigen Detailansichten eines vierten Werkzeugkammer-Elements 60 aus dem Aufbau gemäss Fig. 10. Dieses ist dabei speziell derart ausgeformt, um den Profilquerschnitt des Hybridprofils mit entsprechenden Stegen, Kammern und Hohlräumen auszubilden, wie dies z.B. in Fig. 1 und Fig. 2 gezeigt sind. In **Fig. 17a** ist eine perspektivische Ansicht gezeigt. **Fig. 17b** zeigt dieses Element in einer Ansicht auf den Austritt des Hybridprofils aus der Werkzeugkammer. **Fig. 17c** zeigt dieses Element in einer Ansicht in Bewegungsrichtung des Hybridprofils bzw. Endlosprofils durch die Werkzeugkammer, also in jene Richtung in welche auch das Kunststoffmaterial bei der Herstellung fliesst.

**Fig. 18** zeigt eine vergrösserte Detailansicht einer Ausführungsform eines erfindungsgemässen, abschnittsweisen Beaufschlagens bei einem Herstellverfahren eines Hybridprofils 20c (ähnlich wie in Fig. 4), welches sich in Richtung 65 aus der Werkzeugkammer 51 bewegt, in welcher ein erstes Kunststoffmaterial 35a und ein zweites Kunststoffmaterial 35b bereitgestellt wird. Diese Kunststoffmaterialien 35a,35b werden wie gezeigt erfindungsgemäss mit einer formschlüssigen Verbindung am Endlosprofil 22 aufgebracht, wobei die Kunststoffmaterialien das Endlosprofil gesteuert nur abschnittsweise beaufschlagen und abschnittsweise einbetten, sodass zumindest ein weiterer unbeaufschlagter bzw. uneingebetteter Abschnitt 21 des Endlosprofils am fertig hegestellten Hybridprofil 20c frei von Kunststoffmaterial 35a,35b verbleibt. Dabei sind hier Freihalte-Elemente 64 der Werkzeugkammer 51 dargestellt, welche ein gleitendes Abschliessen oder Abdichten des sich durch die Werkzeugkammer 51 bewegenden Endlosprofils 22 gegenüber dem Kunststoff 35a,35b bewirkt, insbesondere durch Formschluss mit dem Endlosprofil 22 im entsprechenden Abschnitt 21.

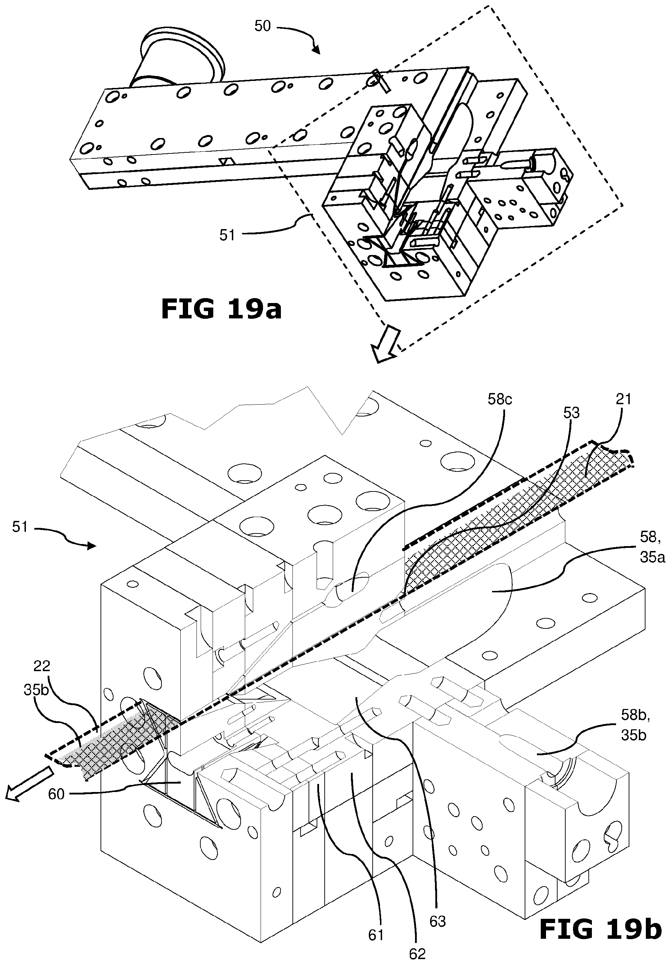

**Fig. 19a** zeigt eine perspektivische Ansicht einer Variante der erfindungsgemässen Vorrichtung 50 (ähnlich wie in Fig. 7, Fig. 8 und Fig. 9) mit einem Teilschnitt, um das Innere der Werkzeugkammer 51 für das erfindungsgemässe Verfahren zu zeigen.

**Fig. 19b** zeigt die markierte, vergrösserte Detailansicht von Fig. 9a. Bezüglich der Details zu den angeführten Elementen wird auf die Beschreibungen zu den entsprechenden Bezugszeichen an anderen Stellen verwiesen. Dabei läuft das Endlosprofil 21 in Pfeilrichtung (Produktionsrichtung) durch die Werkzeugkammer 51. Im Unteren Bereich läuft in dieser Ausführungsform parallel dazu ein hier nicht gezeigtes zweites Endlosprofil 27. Aus dem Kanal 58 wird das erste Kunststoffmaterial 35a bereitgestellt, welches zwischen den Endlosprofilen in Produktionsrichtung nacheinander mit den Elementen 63, 62, 61 und 60 der Werkzeugkammer 51 in die gewünschte Form des resultierenden Hybridprofils 20 geformt wird, beispielsweise in einer Ausgestaltung, wie in Fig. 1 und Fig. 2 gezeigt ist. Das fertige Hybridprofil 20 ist der Übersichtlichkeit halber hier am Ausgang nicht dargestellt, seine Formgebung ist aber anhand dessen Negativform am Ausgang ersichtlich. Es wird auch ein weiteres Kunststoffmaterial 35b über den Kanal 58b bereitgestellt, welcher hier beispielsweise dasselbe wie das erste Kunststoffmaterial 35a ist. Dieses wird jedoch nicht zwischen den beiden Endlosprofilen 21,27 eingebracht und beaufschlagt, sondern von oben bzw. von ausserhalb. Sind Ausnehmungen, Gitterstruktur oder Hinterschneidungen im Endlosprofil vorhanden, können durch diese das erste und zweite Kunststoffmaterial 35a,35b auch eine stoffschlüssige bzw. sich mischende Verbindung eingehen, und zumindest jeweils teilweise in diese Ausnehmungen des Endlosprofils eindringen. Alternativ zu einem zweiten Kunststoffmaterial könnte das erste Kunststoffmaterial auch durch diese Ausnehmungen durchgedrückt werden und auf der anderen Seite vorzugsweise zu zumindest einer glatten Fläche geformt werden.

Entsprechend der Erfindung erfolgt dabei aber stets ein Freihalten von zumindest einem Abschnitt des Endlosprofils (in seinem Querschnitt), welcher nicht mit Kunststoffmaterial 35a35b beaufschlagt wird. Dazu kann z.B. die Werkzeugkammer bzw. eine Führung des Endlosprofils in dieser derart ausgebildet sein, ein Abdichten oder Schliessen dieses Abschnitts vom Kunststoffmaterial zu bewirken, beispielsweise durch Blenden, Führungsnuten, etc.

Es ist dem Fachmann offensichtlich, dass im Rahmen der Erfindung allenfalls auch hier auch separat beschriebene Ausführungsformen bzw. deren Details in anderen Weisen kombinierbar sind, als diese hier explizit aufgeführt sind.

### Bezugszeichenliste

- 20: Hybridisolator, Hybridprofil
- 20a-d: Hybridisolatoren, Hybridprofile
- 21: erste Metallarmierung, Endlosprofil, Trägerstruktur
- 21a: zweite Metallarmierung, Endlosprofil, Trägerstruktur
- 22: erster Befestigungsabschnitt von 21
- 22a: weiterer Befestigungsabschnitt von 21
- 23: Abkantabschnitt
- 23a: Abkantabschnitt
- 24: Montageabschnitt
- 24a: Montageabschnitt
- 25: Abkantung
- 26: weitere Metallarmierung, Endlosprofil, Trägerstruktur
- 27: erster Befestigungsabschnitt von 26
- 27a: weiterer Befestigungsabschnitt von 26
- 28: Gitterstruktur
- 28a: Gitterstruktur
- 29: Gitteröffnungen
- 29a: Gitteröffnungen
- 30: Kastenstruktur
- 31: Aufnahmeraum
- 31a: Aufnahmeraum
- 35: Kunststoffschicht, Kunststoffmaterial
- 35a: erste Kunststoffschicht
- 35b: zweite Kunststoffschicht
- 37: Kunststoffschicht
- 37a: erste Kunststoffschicht
- 37b: zweite Kunststoffschicht
- 40: erster Kunststoffsteg
- 42: weiterer Kunststoffsteg
- 43a-d: Kunststoffstreben
- 45: Verbundprofilsystem
- 50: Vorrichtung zur Hybridprofilherstellung
- 51: Werkzeugkammer
- 52: Kunststoff-Bereitstellungeinrichtung
- 53: Eingang, Blende
- 54a,54b: Antrieb, Bewegungseinrichtung
- 55: Bereitstellungs/Konditioniereinheit
- 57: Zusatz-Kunststoff/Unterdruck Einheit
- 58: Kunststoffleit-Kanal
- 58b: Zweiter Kunststoff-Leitkanal
- 59: Trenn- oder Schneideeinrichtung
- 61: Erstes Leitelement der Werkzeugkammer
- 62: Zweites Leitelement der Werkzeugkammer
- 63: Drittes Leitelement der Werkzeugkammer
- 64: Freihalte-Element der Werkzeugkammer, Abdichtelement
- 65: Bewegungsrichtung
- 70: Kalibriereinheit
- 71: Formkanal
- 72a,72b,72c: Kühlabschnitte
- 80: Metallprofile
- 81: Aufnahmenut
- 82a: Montagenut
- 82b: Montagenut
- 85: weiteres Metallprofil
- 85a: Montagenut
- 85b: Montagenut
- d: Beschichtungsdicke
- d1: Beschichtungsdicke
- d2: Beschichtungsdicke
- B: Überlappungsbereich
- D: Schichtdicke
- D1: Schichtdicke

## Patentansprüche

1. Verfahren zum kontinuierlichen Herstellen eines Hybridprofils aus einer Trägerstruktur und zumindest einem Kunststoff umfassend die folgenden Schritte:
a) Bereitstellen zumindest eines ersten Endlosprofils der Trägerstruktur;
b) Bewegen des Endlosprofils durch eine Werkzeugkammer eines Herstellungswerkzeugs;
c) Bereitstellen eines ersten Kunststoffmaterials;
d) Beaufschlagen des ersten Endlosprofils mit dem ersten Kunststoffmaterial im Bereich der Werkzeugkammer;
e) Erzeugen einer formschlüssigen und/oder stoffschlüssigen Verbindung zwischen dem ersten Endlosprofil und dem Kunststoffmaterial, wobei das erste Kunststoffmaterial das erste Endlosprofil gesteuert nur abschnittsweise beaufschlagt und es dadurch abschnittsweise einbettet.

2. Verfahren nach Anspruch 1, **dadurch gekennzeichnet, dass** das erste Endlosprofil zumindest eine oder mehrere Aussparungen, insbesondere zumindest eine Gitterstruktur, aufweist, wobei während des Schritts d) das Kunststoffmaterial in die zumindest eine oder die mehreren Aussparungen eindringt und diese bevorzugt ausfüllt.

3. Verfahren nach Anspruch 1 oder 2, **dadurch gekennzeichnet, dass** der Schritt e) innerhalb der Werkzeugkammer erfolgt.

4. Verfahren nach Anspruch 1 oder 2, **dadurch gekennzeichnet, dass** der Schritt e) direkt nach dem Austritt des ersten Endlosprofils aus der Werkzeugkammer erfolgt, wobei bevorzugt das Hybridprofil gleichzeitig mit einem Unterdruck beaufschlagt wird.

5. Verfahren nach einem der vorgenannten Ansprüche, **dadurch gekennzeichnet, dass** ein Haft-Kunststoffmaterial bereitgestellt wird, mit der das erste Endlosprofil vor dem Schritt d) beaufschlagt wird.

6. Verfahren nach einem der vorgenannten Ansprüche, **dadurch gekennzeichnet, dass** die formschlüssige Verbindung zwischen dem Endlosprofil und dem Kunststoffmaterial aktiv abgekühlt wird, und/oder nach dem Schritt e) das Hybridprofil mit der formschlüssigen Verbindung zwischen dem Endlosprofil und dem Kunststoffmaterial zugeschnitten wird.

7. Verfahren nach einem der vorgenannten Ansprüche, **dadurch gekennzeichnet, dass** das Kunststoffmaterial eine Kunststoffschmelze ist, welches im Schritt c) bevorzugt mithilfe eines Extrusionsarbeitsschritts erzeugt wird, oder das Kunststoffmaterial ein Mehrkomponentenkunststoff ist, welcher bevorzugt mithilfe eines Pultrusionsarbeitsschritts oder Mischarbeitsschritt erzeugt wird.

8. Verfahren nach einem der vorgenannten Ansprüche, **dadurch gekennzeichnet, dass** zumindest ein weiteres Kunststoffmaterial bereitgestellt wird, und zumindest das Endlosprofil und/oder den ersten Kunststoff mit dem weiteren Kunststoffmaterial beaufschlagt und/oder überzieht, gegebenenfalls kann dabei das weitere Kunststoffmaterial zumindest eine andere technische Eigenschaft aufweist als das erste Kunststoffmaterial aufweisen.

9. Verfahren nach einem der vorgenannten Ansprüche, **dadurch gekennzeichnet, dass** ein weiteres Endlosprofil bereitgestellt wird und im Schritt e) dieses mit dem ersten Endlosprofil durch zumindest eines der Kunststoffmaterialen formschlüssig und/oder kraftschlüssig verbunden wird.

10. Vorrichtung zum kontinuierlichen Herstellen eines Hybridprofils aus einer Trägerstruktur und zumindest einem Kunststoff umfassend eine Werkzeugkammer zum Aufnehmen und zum Durchführen eines ersten Endlosprofils und zumindest einer Eingangsblende zum Führen des ersten Endlosprofils in der Werkzeugkammer und zumindest eines ersten Strömungskanals zum Zuführen eines ersten Kunststoffmaterials in die Werkzeugkammer, **dadurch gekennzeichnet, dass** zumindest ein Kunststoffmaterial-Leitelement in der Werkzeugkammer vorhanden ist, wobei das Kunststoffmaterial-Leitelement ausgebildet ist, das erste Kunststoffmaterial an einen vorbestimmten Abschnitt am ersten Endlosprofil zu leiten und bevorzugt ausgebildet ist, eine weiteren Abschnitt am Endlosprofil von dem ersten Kunststoffmaterial freizuhalten.

11. Vorrichtung nach Anspruch 10, **dadurch gekennzeichnet, dass** zumindest ein Abdichtelement vorhanden ist, das ausgebildet ist, einen weiteren Abschnitt am Endlosprofil von dem ersten Kunststoffmaterial präzise freizuhalten.

12. Vorrichtung nach Anspruch 10 oder 11, **dadurch gekennzeichnet, dass** eine Fördereinrichtung zum Fördern des Endlosprofils oder des Hybridprofils durch die Werkzeugkammer vorhanden ist.

13. Vorrichtung nach einem der Ansprüche 10 bis 12, **dadurch gekennzeichnet, dass** zumindest eine Ausgangsblende vorhanden ist, welche den Ausgangbereich der Werkzeugkammer abdeckt und das Hybridprofil zur Weiterbearbeitung bereitstellt/freigibt.

14. Vorrichtung nach einem der Ansprüche 10 bis 13, **dadurch gekennzeichnet, dass** ein Unterdruckbereich vorhanden ist, der bevorzugt benachbart zur Werkzeugkammer angeordnet ist.

15. Vorrichtung nach einem der Ansprüche 10 bis 14, **dadurch gekennzeichnet, dass** eine Kalibriereinrichtung vorhanden ist und/oder eine Kühleinrichtung zum Abkühlen des Hybridprofils vorhanden ist, wobei die Kühleinrichtung bevorzugt eine indirekte Kühleinheit aufweist, mit der bevorzugt die Kalibriereinrichtung kühlbar ist, oder eine direkte Kühleinheit zum Beaufschlagen des Hybridprofils mit einem Kühlmedium aufweist.
